# EUROPEAN PATENT APPLICATION

(11) **EP 4 595 837 A1**
(43) Date of publication of application: **06.08.2025**
(21) Application number: 25154809.5
(22) Date of filing: 29.01.2025
(51) Int. Cl.: A47J 37/06

(54) **AIR FRYER WITH GOOD HEATING EFFECT**

(30) Priority: 02.02.2024 CN 202410147219; 02.02.2024 CN 202420255728 U; 02.02.2024 CN 202420260125 U; 02.02.2024 CN 202420255745 U; 02.02.2024 CN 202420258675 U
(71) Applicant: Ningbo Careline Electric Appliance Co., Ltd., Ningbo, Zhejiang 315000 (CN)
(72) Inventor: ZHANG, Yichi, Ningbo City, 315000 (CN); BAI, Rongjie, Ningbo City, 315000 (CN); HUANG, Chengzhou, Ningbo City, 315000 (CN)
(74) Representative: Meyer-Dulheuer MD Legal Patentanwälte PartG mbB

(57) **Abstract**

The present application relates to an air fryer with a good heating effect. The air fryer includes a fryer body, a cooking chamber is arranged in the fryer body, an annular air guiding chamber which concaves upwards and opens downwards is arranged at a top of the cooking chamber, a frying basket having a top opening is arranged in the cooking chamber, the top opening of the frying basket is at least partially located under the air guiding chamber, and a vent hole communicating with the cooking chamber is formed in a lower portion of the frying basket; a hot air chamber is arranged in the fryer body, the hot air chamber has an air inlet and an air outlet, and the air outlet and the air inlet are suitable for communicating with the air guiding chamber and the cooking chamber respectively; and an air guiding and distributing member used to guide airflow to enter the air guiding chamber from at least two directions is arranged in the air outlet. The air guiding chamber is arranged at the top of the cooking chamber, and the air guiding and distributing member is arranged at the air outlet, so that the airflow in the air outlet can be guided into the frying basket relatively evenly, thereby improving the cooking effect.

## Description

### CROSS REFERENCE TO RELATED APPLICATIONS

The present disclosure claims priorities to Chinese patent application No. 2024101472198 filed to the China Patent Office on February 2, 2024 and entitled "NOVEL AIR FRYER WITH GOOD HEATING EFFECT"; Chinese patent application No. 2024202557288 filed to the China Patent Office on February 2, 2024 and entitled "AIR FRYER CONVENIENT TO MOUNT"; Chinese patent application No. 2024202601257 filed to the China Patent Office on February 2, 2024 and entitled "AIR FRYER WITH VISIBLE TOP"; Chinese patent application No. 2024202557451 filed to the China Patent Office on February 2, 2024 and entitled "NOVEL AIR FRYER WITH EFFICIENT HEAT DISSIPATION"; and Chinese patent application No. 2024202586755 filed to the China Patent Office on February 2, 2024 and entitled "AIR FRYER WITH GOOD HEAT DISSIPATION EFFECT", the entire contents of which incorporated herein by reference.

### TECHNICAL FIELD

The present disclosure relates to the technical field of kitchen household appliances and cooking appliances, in particular to a novel air fryer with a good heating effect.

### BACKGROUND

With the society's development, an oil-free cooking manner of an air fryer is becoming increasingly popular. In traditional air fryers, most of the air fryers' air frying systems are disposed at the top of cooking chambers to heat food in frying baskets by blowing air from the top. Although this heating manner can improve the heating efficiency, due to the fact that circulating heat flow is directly blown into the frying baskets from top to bottom, burning of the food and uneven heating between upper and lower surfaces of the food are prone to occurring, resulting in a poor cooking effect and poor user experience. In order to meet users' demands, a type of air fryer with air going out from a side portion has emerged in the market, that is, a hot air circulating system is arranged on the side portion of a cooking chamber, a heating assembly is arranged at the top of the cooking chamber, and by directing circulating airflow produced by the hot air circulating system to the top of the cooking chamber, it flows into a frying basket after being heated by the heating assembly. Although this can avoid direct blowing of circulating heat flow, the airflow that is directed into the cooking chamber is usually regionally concentrated, during cooking, uneven heating of food in different regions in the frying basket is prone to occurring, resulting in differences in cooking regions, the cooking effect is poor, and the user experience is also not good.

### SUMMARY

Provided is a novel air fryer with a good heating effect. The novel air fryer includes a fryer body, with a cooking chamber arranged inside, wherein an air duct plate is arranged at a top of the cooking chamber, and the air duct plate is suitable for concaving upwards to form an annular air guiding chamber which opens downwards;
a frying basket, arranged in the cooking chamber, wherein a top opening is formed in a top of the frying basket, the top opening is at least partially located under the air guiding chamber, and a vent hole communicating with the cooking chamber is formed in a lower portion of the frying basket;
a hot air chamber, arranged in the fryer body, wherein the hot air chamber has an air inlet and an air outlet, the air outlet communicates with the air guiding chamber, and the air inlet communicates with the cooking chamber; and
an air guiding and distributing member, arranged in the air outlet, wherein the air guiding and distributing member is suitable for guiding airflow in the air outlet to enter the air guiding chamber from at least two directions.

Further, the air guiding and distributing member includes a first air guiding and distributing portion, a second air guiding and distributing portion and a third air guiding and distributing portion having included angles with one another, the first air guiding and distributing portion is suitable for extending towards the inside of the air outlet, and the second air guiding and distributing portion and the third air guiding and distributing portion are suitable for extending towards two sides of the air guiding chamber respectively.

Further, a centrifugal fan is arranged in the hot air chamber, the air outlet communicates with the hot air chamber on one side of the centrifugal fan through a hot air channel, and the first air guiding and distributing portion is arranged in a side of the air outlet close to a rotation direction of the centrifugal fan, and/or
a connection of the first air guiding and distributing portion with the second air guiding and distributing portion and the third air guiding and distributing portion is suitable for forming an arc-shaped flow guiding structure, and extension lines of extending directions of the second air guiding and distributing portion and the third air guiding and distributing portion are suitable for being tangent to at least one position of an inner side wall of the air guiding chamber respectively.

Further, the air guiding and distributing member is provided with a plurality of bendable bending portions, the air duct plate is provided with a plurality of fixing holes for the bending portions to pass, the bending portions are suitable for passing through the fixing holes from a bottom of the air duct plate and then abutting against a top of the air duct plate after being bent, the air guiding and distributing member includes a first air guiding and distributing portion, a second air guiding and distributing portion and a third air guiding and distributing portion having included angles with one another, and the plurality of bending portions are suitable for being arranged at positions, close to terminal extending ends, of the first air guiding and distributing portion, the second air guiding and distributing portion and the third air guiding and distributing portion respectively.

Further, a window communicating with the cooking chamber is arranged at a top of the fryer body, a window assembly for closing the window is arranged in the window, the window assembly at least partially corresponds to the top opening of the frying basket, the air guiding chamber is arranged surrounding the window on an outer edge of the window, a heating tube surrounding the outer edge of the window is arranged in the air guiding chamber, and the heating tube is a light-wave tube.

Further, the novel air fryer with the good heating effect includes the fryer body, with the cooking chamber arranged inside, wherein a visible assembly is arranged at the top of the cooking chamber, an annular heat dissipation channel is arranged on an outer side of the visible assembly, a heat dissipation chamber is arranged outside the cooking chamber, the heat dissipation channel communicates with the heat dissipation chamber, and the fryer body is provided with an exhaust outlet communicating with the heat dissipation cavity;
an electric appliance, at least partially located in the heat dissipation channel;
a hot air circulating system, arranged in the fryer body and communicating with the cooking chamber;
a cooling fan system, arranged in the fryer body, wherein the fryer body is provided with an air inlet communicating with the cooling fan system, and an air outlet of the cooling fan system communicates with the heat dissipation channel; and
the air guiding and distributing member, arranged in the air outlet, wherein the air guiding and
distributing member is used to guide airflow to enter the heat dissipation channel from at least two directions.

Further, the air guiding and distributing member includes a first flow guiding portion, a second flow guiding portion and a third flow guiding portion having included angles with one another, the first flow guiding portion is suitable for extending towards the inside of the air outlet, the second flow guiding portion and the third flow guiding portion are suitable for extending towards the inside of the heat dissipation channel on two sides of the visible assembly respectively, and the electric appliance is arranged adjacent to the second flow guiding portion and/or the third flow guiding portion.

Further, a side opening communicating with the cooking chamber is formed in a side portion of the fryer body, a frying basket is detachably arranged in the cooking chamber through the side opening, the frying basket includes a frying basket body arranged in the cooking chamber and used to carry food and a frying basket door plate fixedly connected with the frying basket body and used to close the side opening, a cold air channel is arranged in the frying basket door plate, and two ends of the cold air channel are suitable for communicating with the heat dissipation channel and the exhaust outlet respectively.

Further, the novel air fryer with the good heating effect includes a machine body, with a cooking chamber and a heat dissipation chamber located outside the cooking chamber arranged inside, wherein the machine body is provided with an exhaust outlet communicating with the heat dissipation chamber;
a hot air circulating system, arranged in the machine body and communicating with the cooking chamber;
a power cord, extending from the outside to the inside of the machine body and fixed to the machine body; and
a cooling fan system, arranged in the machine body, wherein the machine body is provided with a cold air inlet communicating with the cooling fan system, the cooling fan system includes a first air outlet and a second air outlet, the first air outlet communicates with the heat dissipation chamber, and the second air outlet corresponds to the power cord.

Further, the machine body is internally provided with a mounting chamber communicating with the cold air inlet and the cooling fan system, a drive motor is arranged in the mounting chamber, the drive motor is in driving connection with the cooling fan system and the hot air circulating system, external cold air is suitable for entering the mounting chamber from the cold air inlet under the action of the cooling fan system and flowing towards the cooling fan system, an inner wall of the mounting chamber is provided with a communicating port enabling the mounting chamber and the cooling fan system to communicate, and the communicating port is suitable for corresponding to at least part of the drive motor.

Further, an air outlet channel is arranged in the machine body, one end of the air outlet channel communicates with the atmosphere, the other end is provided with a mixed air outlet, and the mixed air outlet is suitable for communicating with the hot air circulating system and the cooling fan system.

Further, the novel air fryer with the good heating effect includes the fryer body, with a cooking chamber having a top opening arranged inside, wherein an inner transparent plate used to close the top opening is arranged at the top opening;
a decorative ring, arranged on the top opening, wherein a window corresponding to the top opening is arranged in the middle of the decorative ring, and a visible panel is arranged at an upper opening of the window; and
a heat insulation ring, arranged between the top opening and the decorative ring, wherein a hole corresponding to the top opening is formed in the middle of the heat insulation ring, a lower side of the heat insulation ring is connected with the fryer body, and an upper side is connected with a lower side of the decorative ring.

Further, an air duct plate defining the top opening and an upper machine core are arranged at the top of the cooking chamber, the upper machine core is located above the air duct plate, a periphery of the inner transparent plate is suitable for being pressed and fixed to the air duct plate by the upper machine core, an outer edge of the inner transparent plate is sleeved with a sealing ring made of an elastic high-temperature-resistant material, and the inner transparent plate is suitable for being in tight fit with the air duct plate and the upper machine core through the sealing ring.

Further, the novel air fryer with the good heating effect includes the fryer body and the cooking chamber arranged in the fryer body, and an air duct plate, a heating tube and a heating tube fixing structure used to fix the heating tube to an inner side of the air duct plate are arranged in the cooking chamber. The novel air fryer is characterized in that, the heating tube fixing structure includes a connecting member and a fixing member connected with the connecting member to clamp the heating tube, a limiting portion is arranged on the connecting member, a bendable bending portion is arranged at an end of the connecting member close to the limiting portion, the bending portion has an extended state and a bent state, the air duct plate is provided with a connecting hole corresponding to the bending portion, in the extended state, the bending portion is able to stretch into an outer side of the air duct plate from an inner side of the air duct plate through the connecting hole, and when the bending portion stretches into the outer side of the air duct plate from the inner side of the air duct plate through the connecting hole and the bending portion is adjusted to be in the bent state, the limiting portion abuts against an inner side wall of the air duct plate, and the bending portion abuts against an outer side wall of the air duct plate.

Further, the connecting member includes a first connecting member and a second connecting member arranged side by side, the first connecting member and the second connecting member are connected to two ends of the fixing member respectively, the first connecting member and the second connecting member are provided with a first bending portion and a second bending portion respectively, and the first bending portion and the second bending portion are suitable for being bent away from each other respectively; and the first connecting member and the second connecting member are provided with a first notch and a second notch respectively, the first notch and the second notch transversely extend to separate at least part of the bending portion and the limiting portion, the first notch and the second notch have opposite extending directions, and widths of the first notch and the second notch match with a thickness of the air duct plate.

### BRIEF DESCRIPTION OF THE DRAWINGS

In order to describe technical solutions in specific implementations of the present disclosure or in the prior art more clearly, the accompanying drawings that need to be used in the description of the specific implementations or the prior art will be briefly introduced below. Apparently, the accompanying drawings in the following description are some implementations of the present disclosure, and for those of ordinary skill in the art, on the premise of no creative labor, other accompanying drawings may also be obtained from these accompanying drawings.
FIG 1 is an overall sectional view of an air fryer with a good heating effect of the present disclosure.
FIG 2 is a schematic diagram of flow guiding by an air guiding and distributing member in an air fryer with a good heating effect of the present disclosure.
FIG 3 is a schematic diagram of mounting of an air guiding and distributing member in an air fryer with a good heating effect of the present disclosure.
FIG 4 is an overall sectional view of an air fryer of the present disclosure.
FIG 5 is a schematic diagram of fixation of a heating tube in an air fryer of the present disclosure.
FIG 6 is an overall schematic diagram of a heating tube fixing structure in an air fryer of the present disclosure.
FIG 7 is a schematic diagram of mounting of a heating tube fixing structure in an air fryer of the present disclosure.
FIG 8 is an overall structural sectional view of an air fryer with a visible top of the present disclosure.
FIG 9 is a structural exploded view of an air fryer with a visible top of the present disclosure.
FIG 10 is an amplified sectional view of part of structures of an air fryer with a visible top of the present disclosure.
FIG 11 is an overall sectional view of an air fryer with a rear heat dissipation system of the present disclosure.
FIG 12 is a schematic diagram of flow guiding of an air fryer with a rear heat dissipation system of the present disclosure.
FIG 13 is an overall sectional view of an air fryer with a good heat dissipation effect of the present disclosure.
FIG 14 is an exploded view of part of structures of an air fryer with a good heat dissipation effect of the present disclosure.
FIG 15 is a schematic diagram of part of structures of an air fryer with a good heat dissipation effect of the present disclosure.
FIG 16 is a schematic diagram of internal structures of an air fryer with a good heat dissipation effect of the present disclosure.

### Reference numerals:

10, fryer body; 11, cooking chamber; 111, top opening; 112, inner transparent plate; 113, heat insulation ring; 114, decorative ring; 117, upper machine core; 118, sealing ring; 119, light guiding barrier; 12, air duct plate; 121, fixing hole; 13, air guiding chamber; 131, connecting hole; 14, hot air chamber; 141, air inlet; 142, air outlet; 15, air guiding and distributing member; 151, first air guiding and distributing portion; 152, second air guiding and distributing portion; 153, third air guiding and distributing portion; 154, bending portion; 16, hot air channel; 161, communicating port; 17, window; 171, first air guiding portion; 172, second air guiding portion; 173, third air guiding portion; 18, visible assembly; 19, air outlet channel; 191, mixed air outlet; 20, hot air circulating system; 21, centrifugal fan; 211, limiting portion; 212, bending portion; 2121, first bending portion; 2122, second bending portion; 213, first connecting member; 2131, first positioning portion; 214, second connecting member; 2141, second positioning portion; 215, first notch; 216, second notch; 22, heating tube; 221, strip-shaped notch; 30, frying basket; 31, first spigot portion; 313, heat dissipation channel; 314, heat dissipation chamber; 315, heat dissipation air inlet; 316, exhaust outlet; 317, heat dissipation air guiding and distributing member; 318, mounting chamber; 32, first spigot groove; 331, frying basket body; 332, frying basket door plate; 321, cold air channel; 351, heat dissipation air outlet; 40, electric appliance; 41, second spigot portion; 42, second spigot groove; 50, cooling fan system; 51, drive motor; 52, heat dissipation centrifugal fan; 53, flow guiding surrounding plate; 54, flow guiding channel; 541, first air outlet; 542, second air outlet; 60, drive system; 70, power cord; 80, heating tube fixing structure; 81, connecting member; 82, fixing member; and 83, limiting port.

### DETAILED DESCRIPTION

The present application provides a novel air fryer with a good heating effect, to solve the technical problems of poor cooking effect and poor user experience of existing air fryers.

In order to solve the above technical problems, an air fryer with a good heating effect is provided. The air fryer includes a fryer body and a frying basket, a cooking chamber is arranged in the fryer body, an air duct plate is arranged at a top of the cooking chamber, and the air duct plate is suitable for concaving upwards to form an annular air guiding chamber which opens downwards; the frying basket is suitable for being arranged in the cooking chamber, a top opening is formed in a top of the frying basket, the top opening is at least partially located under the air guiding chamber, and a vent hole communicating with the cooking chamber is formed in a lower portion of the frying basket; a hot air chamber is arranged in the fryer body, the hot air chamber has an air inlet and an air outlet, the air outlet communicates with the air guiding chamber, and the air inlet communicates with the cooking chamber; and an air guiding and distributing member is arranged in the air outlet, and the air guiding and distributing member is suitable for guiding airflow in the air outlet to enter the air guiding chamber from at least two directions. In the present application, the air guiding chamber which communicates with the air outlet and opens downwards is arranged at the top of the cooking chamber, so that the airflow flowing out of the air outlet can be guided downwards to enter the frying basket through the top opening of the frying basket so as to heat food in the frying basket, and the situation that food is burnt because circulating heat flow is directly blown into the frying basket can be avoided; and meanwhile, in the present application, the air guiding chamber is arranged to be annular, and the air guiding and distributing member is arranged in the air outlet to distribute and guide the airflow in the air outlet into the air guiding chamber from at least two directions, so that the airflow flowing out of the air outlet is guided into the frying basket relatively evenly to heat food in the frying basket, the problem that the airflow flowing out of the air outlet is regionally concentrated, the food in the frying basket is unevenly heated, and differences in cooking region are caused is avoided, the cooking effect is effectively improved, and the user experience is improved.

In an optional embodiment, the air guiding and distributing member includes a first air guiding and distributing portion, a second air guiding and distributing portion and a third air guiding and distributing portion having included angles with one another, the first air guiding and distributing portion is suitable for extending towards the inside of the air outlet, and the second air guiding and distributing portion and the third air guiding and distributing portion are suitable for extending towards two sides of the air guiding chamber respectively. By means of the first air guiding and distributing portion, the second air guiding and distributing portion and the third air guiding and distributing portion, the airflow in the air outlet can be distributed and guided to two sides of the air guiding chamber, so that the airflow entering the frying basket by being guided via the air guiding chamber is distributed more evenly, and the cooking effect can be effectively improved.

In an optional embodiment, a centrifugal fan is arranged in the hot air chamber, the air outlet communicates with the hot air chamber on one side of the centrifugal fan through a hot air channel, and the first air guiding and distributing portion is arranged in a side of the air outlet close to a rotation direction of the centrifugal fan. By arranging the first air guiding and distributing portion in the side of the air outlet close to the rotation direction of the centrifugal fan, the impact of an air pressure difference in the airflow produced by the centrifugal fan on the air guiding and distributing member can be reduced, and the airflow entering the air guiding chamber by being guided via the air guiding and distributing member is distributed more evenly, so that the airflow entering the frying basket by being guided via the air guiding chamber is distributed more evenly, and the cooking effect can be effectively improved.

In an optional embodiment, a connection of the first air guiding and distributing portion with the second air guiding and distributing portion and the third air guiding and distributing portion is suitable for forming an arc-shaped flow guiding structure. By arranging the connection of the first air guiding and distributing portion with the second air guiding and distributing portion and the third air guiding and distributing portion as the arc-shaped flow guiding structure, resistance to airflow during air guiding and distributing by the air guiding and distributing member can be reduced, and thus the airflow circulating efficiency is improved.

In an optional embodiment, extension lines of extending directions of the second air guiding and distributing portion and the third air guiding and distributing portion are suitable for being tangent to at least one position of an inner side wall of the air guiding chamber respectively. By arranging the extension lines of the extending directions of the second air guiding and distributing portion and the third air guiding and distributing portion to be tangent to at least one position of the inner side wall of the air guiding chamber respectively, the airflow in the air outlet can be efficiently guided into the air guiding chamber, and an airflow circulating speed in the cooking chamber can be effectively increased.

In an optional embodiment, the air guiding and distributing member is suitable for being formed by extending the air duct plate downwards. By integrally forming the air guiding and distributing member and the air duct plate, the structures of the air duct plate and the air guiding and distributing member can be simplified, mounting steps for the air guiding and distributing member are reduced, and thus the production cost is lowered.

In an optional embodiment, the air guiding and distributing member is provided with a plurality of bendable bending portions, the air duct plate is provided with a plurality of fixing holes for the bending portions to pass, and the bending portions are suitable for passing through the fixing holes from a bottom of the air duct plate and then abutting against a top of the air duct plate after being bent. In the air fryer, by arranging the plurality of bendable bending portions on the air guiding and distributing member, the bending portions can be bent to fix the air guiding and distributing member to the air duct plate. At the same time, by arranging the plurality of bendable bending portions on the air guiding and distributing member, not only can the connection stability of the air guiding and distributing member and the air duct plate be guaranteed, but also mounting, dismounting and replacement of the air guiding and distributing member are facilitated, and the use convenience of the air guiding and distributing member can be effectively improved.

In an optional embodiment, the air guiding and distributing member includes a first air guiding and distributing portion, a second air guiding and distributing portion and a third air guiding and distributing portion having included angles with one another, and the plurality of bending portions are suitable for being arranged at positions, close to terminal extending ends, of the first air guiding and distributing portion, the second air guiding and distributing portion and the third air guiding and distributing portion respectively. The plurality of bending portions are arranged at the positions, close to the terminal extending ends, of the first air guiding and distributing portion, the second air guiding and distributing portion and the third air guiding and distributing portion respectively, the possibility that the terminal extending ends of the first air guiding and distributing portion, the second air guiding and distributing portion and the third air guiding and distributing portion are deformed or displaced due to the impact of airflow can be lowered, and the performance stability and reliability of the air guiding and distributing member are effectively improved.

In an optional embodiment, a window communicating with the cooking chamber is arranged at a top of the fryer body, a visible assembly for closing the window is arranged in the window, at least part of the visible assembly corresponds to the top opening of the frying basket, and the air guiding chamber is arranged surrounding the window on an outer edge of the window. By arranging the window communicating with the cooking chamber at the top of the fryer body, a user can visually observe a cooking state of food in the cooking chamber, so that the food in the cooking chamber is better cooked, and the cooking effect and user experience can be effectively improved.

In an optional embodiment, a heating tube surrounding the outer edge of the window is arranged in the air guiding chamber, and the heating tube is a light-wave tube. In the present application, by arranging the heating tube surrounding the outer edge of the window in the air guiding chamber, the heating tube can better heat the airflow in the air guiding chamber. At the same time, the light-wave tube is selected as the heating tube, and the heating tube is arranged in the air guiding chamber surrounding the outer edge of the window, so that the heating tube can illuminate the inside of the cooking chamber while conducting heating so as to effectively improve the visibility and visual effect of the air fryer, the side wall of the air guiding chamber may further be used to shield light produced by the heating tube, so as to avoid the interference of the light produced by the heating tube on the visibility of the window, and the visibility and visual effect of the air fryer are effectively guaranteed.

The present embodiment further provides an air fryer convenient to mount, including a fryer body and a cooking chamber arranged in the fryer body, an air duct plate, a heating tube and a heating tube fixing structure used to fix the heating tube to an inner side of the air duct plate are arranged in the cooking chamber, the heating tube fixing structure includes a connecting member and a fixing member connected with the connecting member to clamp the heating tube, a limiting portion is arranged on the connecting member, a bendable bending portion is arranged at an end of the connecting member close to the limiting portion, the bending portion has an extended state and a bent state, and the air duct plate is provided with a connecting hole corresponding to the bending portion. In the extended state, the bending portion is able to stretch into an outer side of the air duct plate from an inner side of the air duct plate through the connecting hole. When the bending portion stretches into the outer side of the air duct plate from the inner side of the air duct plate through the connecting hole and the bending portion is adjusted to be in the bent state, the limiting portion abuts against an inner side wall of the air duct plate, and the bending portion abuts against an outer side wall of the air duct plate. In the air fryer, the heating tube fixing structure fixes the heating tube by bending the bending portions, such that the heating tube fixing structure does not need screws for fixation, and compared to a screw fixing manner of a traditional tube clamp, the fixing manner of the heating tube fixing structure enables the heating tube to be dismounted and mounted more simply and conveniently, and also lowers the cost. At the same time, the heating tube fixing structure fixes the heating tube by bending fixation, so that the problems that screws are prone to loosening and falling due to vibration when fixed, the reliability and stability are poor, and user experience is not good can be avoided.

In an optional embodiment, the connecting member includes a first connecting member and a second connecting member arranged side by side, and the first connecting member and the second connecting member are connected to two ends of the fixing member respectively. The first connecting member and the second connecting member are suitable for limiting the fixing member in a left-right direction, and by arranging the first connecting member and the second connecting member at the two ends of the fixing member respectively, the connection stability of the heating tube fixing structure can be effectively improved, and left-right shaking during fixation of the heating tube by the heating tube fixing structure is avoided.

In an optional embodiment, the first connecting member and the second connecting member are provided with a first bending portion and a second bending portion respectively, and the first bending portion and the second bending portion are suitable for being bent away from each other respectively. The first bending portion and the second bending portion are arranged to be bent away from each other respectively, vertical limiting in a larger region can be created to achieve the better mounting effect, and it can also be guaranteed that the first bending portion and the second bending portion have sufficient bendable space, such that the heating tube fixing structure can be mounted and dismounted by changing the states of the first bending portion and the second bending portion.

In an optional embodiment, a first positioning portion is arranged on a side of the first connecting member opposite to the first bending portion, a second positioning portion is arranged on a side of the second connecting member opposite to the second bending portion, and when the first bending portion and the second bending portion are adjusted to be in a bent state, the first positioning portion and the second positioning portion abut against side walls, in at least two directions, of the connecting hole. The first positioning portion and the second positioning portion are suitable for transversely limiting the heating tube fixing structure, and by arranging the first positioning portion and the second positioning portion on the first connecting member and the second connecting member respectively, the connection stability of the heating tube fixing structure can be effectively improved, and front-back shaking during fixation of the heating tube by the heating tube fixing structure is avoided.

In an optional embodiment, the first connecting member and the second connecting member are provided with a first notch and a second notch respectively, the first notch and the second notch transversely extend to separate at least part of the bending portion and the limiting portion, the first notch and the second notch have opposite extending directions, and widths of the first notch and the second notch match with a thickness of the air duct plate. The first connecting member and the second connecting member are provided with the first notch and the second notch respectively, and the first notch and the second notch transversely extend to separate at least part of the bending portion and the limiting portion, so that not only can the problem that the first connecting member and the second connecting member are prone to deformation when the bending portion is bent be avoided, but also the bending difficulty of the bending portion can be effectively lowered, such that bending of the bending portion is more labor-saving, and the user experience is effectively improved.

In an optional embodiment, the middle of the fixing member is suitable for being bent away from the first connecting member and the second connecting member to form an arc-shaped clamping structure matching with the heating tube, a limiting port is suitable for being formed between two ends of the fixing member, and a size of the limiting port is smaller than an external size of the heating tube. The middle of the fixing member is arranged as the arc-shaped clamping structure matching with the heating tube, such that the fixing member can better fix the heating tube. At the same time, the limiting port is arranged at two ends of the fixing member, and the size of the limiting port is set to be smaller than the external size of the heating tube, so that the heating tube can be better limited in the arc-shaped clamping structure of the fixing member, shaking damage to the heating tube during the movement of the air fryer is avoided, and the stability and reliability of fixation of the heating tube are effectively guaranteed.

In an optional embodiment, the first connecting member and the second connecting member are of an axial symmetry structure. By arranging the first connecting member and the second connecting member as the axial symmetry structure, when mounted, the first connecting member and the second connecting member can be directly inserted into the connecting hole without distinguishing between directions, the mounting difficulty of the heating tube fixing structure can be effectively lowered, and the mounting convenience is improved.

In an optional embodiment, a width of the connecting member is suitable for being smaller gradually from an end close to the fixing member to an end away from the fixing member, the limiting portion is formed at the position where the connecting member and the connecting hole have the same width, and when the bending portion stretches into the outer side of the air duct plate from the inner side of the air duct plate through the connecting hole and the bending portion is adjusted to be in the bent state, the limiting portion abuts against the inner side wall of the air duct plate close to the connecting hole, and the bending portion abuts against the outer side wall of the air duct plate. The width of the connecting member is set to be of a tapered structure of being smaller gradually from the end close to the fixing member to the end away from the fixing member, such that when the heating tube fixing structure and the air duct plate are connected, after being inserted into the connecting hole by a certain length, the connecting member may be directly clamped in the connecting hole to achieve limitation, not only can the heating tube fixing structure be simplified, but also no distinguishing between directions is required when the connecting member is inserted into the connecting hole from the inner side of the air duct plate, the mounting difficulty of the heating tube fixing structure is effectively lowered, and the mounting convenience is improved.

In an optional embodiment, the fixing member is suitable for being made of an elastic high-temperature-resistant material, and a strip-shaped notch forming an included angle with the heating tube is arranged in the middle of the fixing member. By manufacturing the fixing member from the elastic high-temperature-resistant material, not only can the impact of a high temperature produced by the heating tube on the performance of the fixing member be avoided, but also the fixing member can adapt to thermal expansion and contraction of the heating tube, avoiding clamping damage to the heating tube during thermal expansion of the heating tube, and thus the performance stability and reliability of the heating tube fixing structure are guaranteed. At the same time, by arranging the strip-shaped notch forming the included angle with the heating tube in the middle of the fixing member, the fixing member can better match with the heating tube, and thus the heating tube is better fixed.

In an optional embodiment, the heating tube is the light-wave tube. The light-wave tube is selected as the heating tube, so that the heating tube can illuminate the inside of the cooking chamber while conducting heating so as to improve the visibility and visual effect in the cooking chamber, the heating tube and the heating tube fixing structure may further have a higher fit degree, an thus the heating tube fixing structure can better fix the heating tube.

The present embodiment further provides an air fryer with a visible top, including a fryer body, a decorative ring and a heat insulation ring. A cooking chamber with a top opening is arranged in the fryer body, and an inner transparent plate used to close the top opening is arranged at the top opening. The decorative ring is arranged on the top opening, a window corresponding to the top opening is arranged in the middle of the decorative ring, and a visible panel is arranged at an upper opening of the window. The heat insulation ring is arranged between the top opening and the decorative ring, a hole corresponding to the top opening is formed in the middle of the heat insulation ring, a lower side of the heat insulation ring is connected with the fryer body, and an upper side is connected with a lower side of the decorative ring. In the present application, the top opening is arranged at the top of the cooking chamber, and the inner transparent plate for closing the top opening is arranged at the top opening, so that situations in the cooking chamber are visible, a user can visually observe cooking situations of food in the cooking chamber, and thus the food in the cooking chamber is better cooked, and the cooking effect and the user's cooking experience can be effectively improved. At the same time, in the present application, the heat insulation ring separating the inner transparent plate and the visible panel and the decorative ring connected with the heat insulation ring are arranged on the top opening, so that a distance between the visible panel and the inner transparent plate is increased, a sufficient heat radiation buffer space exists between the inner transparent plate and the visible panel, the situation that the user is scalded due to the fact that a high temperature in the cooking chamber is directly thermally transferred to the visible panel is avoided, and the use safety and user experience are effectively improved.

In an optional embodiment, an air duct plate defining the top opening and an upper machine core are arranged at the top of the cooking chamber, the upper machine core is located above the air duct plate, and a periphery of the inner transparent plate is suitable for being pressed and fixed to the air duct plate by the upper machine core. The inner transparent plate is directly pressed and fixed to the air duct plate by the upper machine core, so that not only can dismounting and mounting difficulties of the inner transparent plate be lowered effectively, but also parts required for fixing the inner transparent plate are reduced on the premise of guaranteeing connection stability, and thus the production cost and use cost are lowered.

In an optional embodiment, an outer edge of the inner transparent plate is sleeved with a sealing ring made of an elastic high-temperature-resistant material, and the inner transparent plate is suitable for being in tight fit with the air duct plate and the upper machine core through the sealing ring. The sealing ring is suitable for playing a sealing role, and the outer edge of the inner transparent plate is sleeved with the sealing ring so as to be in tight fit with the air duct plate and the upper machine core, so that cooking efficiency can be effectively prevented from being influenced by outward flowing of circulating heat flow in the cooking chamber, and the situation that normal operation of an electric appliance in the fryer body is affected due to the fact that the circulating heat flow in the cooking chamber flows outwards to other positions of the fryer body can further be avoided. At the same time, the sealing ring is manufactured from the elastic high-temperature-resistant material, so that the sealing ring can be prevented from being influenced by heat transfer of a high temperature in the cooking chamber, and thus the sealing performance of the sealing ring is effectively guaranteed.

In an optional embodiment, the heat insulation ring is arranged above the upper machine core, one of the heat insulation ring and the upper machine core is provided with a plurality of first spigot portions, the other one is provided with a plurality of first spigot grooves, and the heat insulation ring is suitable for being in spigot connection with the upper machine core through the first spigot portions and the first spigot grooves. By spigot connection between the heat insulation ring and the upper machine core, not only can dismounting and mounting be convenient, but also a connection structure can be simplified, the number of parts required for connection is reduced, and the production cost and use cost are lowered.

In an optional embodiment, one of the decorative ring and the heat insulation ring is provided with a plurality of second spigot portions, the other one is provided with a plurality of second spigot grooves, and the decorative ring is suitable for being in spigot connection with the heat insulation ring through the second spigot portions and the second spigot grooves. By spigot connection between the heat insulation ring and the decorative ring, not only can dismounting and mounting be convenient, but also a connection structure can be simplified, the number of parts required for connection is reduced, and the production cost and use cost are lowered.

In an optional embodiment, the heat insulation ring is suitable for being made of a high-temperature-resistant heat insulation material. By manufacturing the heat insulation ring from the high-temperature-resistant heat insulation material, not only can the impact on performance of the heat insulation ring due to heat transfer of a high temperature be avoided, but also heat can be insulated effectively, and the performance of the decorative ring is prevented from being influenced by the transfer of the high temperature in the cooking chamber to the decorative ring.

In an optional embodiment, the decorative ring is of a horn-shaped structure which opens upwards, a middle channel of the decorative ring forms the window, and a lower opening of the window corresponds to the top opening. By arranging the decorative ring to be of the horn-shaped structure which opens upwards, the volume of the heat radiation buffer space between the visible panel and the inner transparent plate can be effectively increased while the visual effect is guaranteed.

In an optional embodiment, the visible panel is suitable for being of an oblique structure inclining from one side to the other side of the visible panel. By arranging the visible panel to be the oblique structure inclining from one side to the other side, the situation that the visibility and overall beauty of the air fryer are affected due to the fact that impurities such as external liquids and dust are accumulated on the visible panel can be avoided, and the user experience is effectively improved.

In an optional embodiment, a heating tube surrounding the top opening is arranged on an outer edge of the top opening of the cooking chamber, and the heating tube is a light-wave tube. By arranging the heating tube, namely the light-wave tube, on the outer edge of the top opening, the inside of the cooking chamber can be illuminated while air in the cooking chamber is heated, and thus the visibility and visual effect in the cooking chamber are improved.

In an optional embodiment, a light guiding barrier is further arranged on the outer edge of the top opening, the heating tube is arranged outside the light guiding barrier, and light produced by the heating tube is suitable for being guided to the bottom of the cooking chamber by the light guiding barrier. The light guiding barrier is suitable for playing light guiding and shielding roles, and by arranging the light guiding barrier on the outer edge of the top opening, part of the light produced by the heating tube can be shielded to prevent the light produced by the heating tube from affecting the visibility of the top opening, and the light produced by the heating tube can further be guided to the bottom of the cooking chamber, so that the inside of the cooking chamber is illuminated, and the visibility and visual effect in the cooking chamber can be further improved.

The present embodiment further provides a novel air fryer with a rear heat dissipation system. The novel air fryer includes a fryer body, wherein a cooking chamber is arranged in the fryer body, a visible assembly is arranged at the top of the cooking chamber, an annular heat dissipation channel is arranged on an outer side of the visible assembly, a heat dissipation chamber is arranged outside the cooking chamber, the heat dissipation channel communicates with the heat dissipation chamber, and the fryer body is provided with an exhaust outlet communicating with the heat dissipation cavity; an electric appliance, at least partially located in the heat dissipation channel; a hot air circulating system, arranged in the fryer body and communicating with the cooking chamber; a cooling fan system, arranged in the fryer body, wherein the fryer body is provided with an air inlet communicating with the cooling fan system, and an air outlet of the cooling fan system communicates with the heat dissipation channel; and an air guiding and distributing member, arranged in the air outlet, wherein the air guiding and distributing member is used to guide airflow to enter the heat dissipation channel from at least two directions. In the present application, the annular heat dissipation channel and the air guiding and distributing member used to guide flow into the heat dissipation channel are arranged in the fryer body, so that airflow in the air outlet can be guided into the heat dissipation chamber relatively evenly, thereby dissipating heat of a machine body of the air fryer, the heat dissipation effect of the machine body can be effectively improved, and the user experience is improved. At the same time, in the air fryer, the heat dissipation channel is arranged surrounding the outer side of the visible assembly, so that heat dissipation cold flow in the heat dissipation channel is used to dissipate heat of the visible assembly, scalding of a user caused by an overhigh temperature of the visible assembly is avoided, and the use safety is effectively improved. In addition, in the air fryer, the electric appliance is at least partially arranged in the heat dissipation channel, so that the heat dissipation cold flow in the heat dissipation channel is used to dissipate heat of the electric appliance, thereby guaranteeing normal operation of the electric appliance, and the performance stability and reliability of the air fryer product can be effectively improved.

In an optional embodiment, the air guiding and distributing member includes a first flow guiding portion, a second flow guiding portion and a third flow guiding portion having included angles with one another, the first flow guiding portion is suitable for extending towards the inside of the air outlet, and the second flow guiding portion and the third flow guiding portion are suitable for extending towards the inside of the heat dissipation channel on two sides of the visible assembly respectively. By means of the first flow guiding portion, the second flow guiding portion and the third flow guiding portion, the airflow in the air outlet can be distributed and guided to two sides of the heat dissipation channel, so that the airflow entering the heat dissipation chamber via the heat dissipation channel is distributed more evenly, and the heat dissipation effect can be effectively improved.

In an optional embodiment, a connection of the first flow guiding portion with the second flow guiding portion and the third flow guiding portion is suitable for forming an arc-shaped flow guiding structure. By arranging the connection of the first flow guiding portion with the second flow guiding portion and the third flow guiding portion as the arc-shaped flow guiding structure, resistance to airflow during air guiding and distributing by the air guiding and distributing member can be reduced, and thus the airflow circulating efficiency is improved, thereby improving the heat dissipation effect.

In an optional embodiment, the electric appliance is arranged adjacent to the second flow guiding portion and/or the third flow guiding portion. By arranging the electric appliance adjacent to the second flow guiding portion and/or the third flow guiding portion, the airflow in the air outlet can be directly used to dissipate heat of the electric appliance after being distributed and guided by the air guiding and distributing member, and thus the heat dissipation efficiency and heat dissipation effect of the electric appliance can be effectively improved.

In an optional embodiment, the cooling fan system includes a centrifugal fan, and the electric appliance is suitable for being arranged in the heat dissipation channel close to one side of a rotation direction of the centrifugal fan. In the air fryer, since airflow produced by the centrifugal fan is spiral airflow, one side of the air outlet close to the rotation direction of the centrifugal fan has a relatively high air pressure and airflow density, and by arranging the electric appliance in the heat dissipation channel close to one side of the rotation direction of the centrifugal fan, the heat dissipation efficiency and heat dissipation effect of the electric appliance can be effectively improved.

In an optional embodiment, the fryer body is internally provided with a mounting chamber communicating with the air inlet and the cooling fan system, a drive system being in driving connection with the cooling fan system and the hot air circulating system after extending is arranged in the mounting chamber, and external cold air is suitable for entering the mounting chamber from the air inlet under the action of the cooling fan system and flowing towards the exhaust outlet. By enabling the air inlet to communicate with the mounting chamber and arranging the drive system in the mounting chamber, the drive system can be cooled while air enters, and thus normal operation of the drive system is guaranteed, and the performance stability and reliability of the drive system can be effectively improved.

In an optional embodiment, the cooling fan system includes a centrifugal fan and a flow guiding surrounding plate, the flow guiding surrounding plate is suitable for being arranged surrounding at least part of the centrifugal fan, a flow guiding channel formed by the extension of the flow guiding surrounding plate is arranged above the flow guiding surrounding plate, and the flow guiding channel is suitable for communicating with the air outlet. The flow guiding surrounding plate is suitable for playing a flow guiding role, by means of the flow guiding surrounding plate, airflow thrown out by the centrifugal fan can be blocked and guided and centralized at the air outlet to flow out, the problem that the heat dissipation effect is poor due to the fact that heat dissipation cold flow produced by the centrifugal fan is too dispersive is avoided, and the heat dissipation efficiency and heat dissipation effect are effectively improved.

In an optional embodiment, a side opening communicating with the cooking chamber is formed in a side portion of the fryer body, a frying basket is detachably arranged in the cooking chamber through the side opening, the frying basket includes a frying basket body arranged in the cooking chamber and used to carry food and a frying basket door plate fixedly connected with the frying basket body and used to close the side opening, a cold air channel is arranged in the frying basket door plate, and two ends of the cold air channel are suitable for communicating with the heat dissipation channel and the exhaust outlet respectively. By arranging the cold air channel communicating with the heat dissipation channel and the exhaust outlet in the frying basket door plate, heat dissipation of the frying basket door plate can be achieved, the problem of scalding of a user caused by heat transfer of a high temperature in the cooking chamber to the frying basket door plate is avoided, and the use safety and user experience are effectively improved.

In an optional embodiment, the heat dissipation chamber is suitable for being arranged surrounding at least part of the cooking chamber. By arranging the heat dissipation chamber surrounding the cooking chamber, heat dissipation of an outer wall of the cooking chamber can be achieved, damage to the electric appliance outside the cooking chamber caused by heat transfer of the high temperature in the cooking chamber to the outside of the cooking chamber is avoided, and the performance stability and reliability of the air fryer can be effectively improved.

In an optional embodiment, the air inlet and the exhaust outlet are suitable for being arranged at a rear side and a bottom of the fryer body respectively. By arranging the air inlet and the exhaust outlet at the rear side and the bottom of the fryer body respectively, the air inlet and the exhaust outlet can be hidden, so that the overall beauty of the air fryer product is improved.

The present embodiment further provides an air fryer with a good heat dissipation effect. The air fryer includes a machine body, with a cooking chamber and a heat dissipation chamber located outside the cooking chamber arranged inside, wherein the machine body is provided with an exhaust outlet communicating with the heat dissipation chamber; a hot air circulating system, arranged in the machine body and communicating with the cooking chamber; a power cord, extending from the outside to the inside of the machine body and fixed to the machine body; and a cooling fan system, arranged in the machine body, wherein the machine body is provided with a cold air inlet communicating with the cooling fan system, the cooling fan system includes a first air outlet and a second air outlet, the first air outlet communicates with the heat dissipation chamber, and the second air outlet corresponds to the power cord. In the present application, by arranging the heat dissipation chamber outside the cooking chamber and enabling the heat dissipation chamber to communicate with the cooling fan system, heat dissipation cold flow produced by the cooling fan system can be used to dissipate heat of the machine body, so that the situation that normal operation of an electric appliance in the machine body is affected by an overhigh temperature of the machine body is avoided. At the same time, in the present application, the second air outlet of the cooling fan system is arranged to correspond to the power cord, so that the heat dissipation cold flow produced by the cooling fan system can be used to dissipate heat of the power cord so as to avoid an overhigh temperature of the power cord, normal operation of the power cord and the electric appliance in the machine body is effectively guaranteed, and the use safety and user experience of the air fryer product are improved.

In an optional embodiment, the cooling fan system includes a cooling fan, and the second air outlet is suitable for corresponding to at least part of the cooling fan. The second air outlet corresponds to at least part of the cooling fan, so that the heat dissipation cold flow produced by the cooling fan can better flow out from the second air outlet so as to dissipate heat of the power cord, and the heat dissipation effect and heat dissipation efficiency can be effectively improved.

In an optional embodiment, a heat dissipation channel communicating with the exhaust outlet and the second air outlet is arranged in the machine body, and an end of the power cord extending into the machine body is at least partially located in the heat dissipation channel. The heat dissipation channel is arranged in the machine body, and at least part of the power cord is arranged in the heat dissipation channel, so that the heat dissipation cold flow produced by the cooling fan can better dissipate heat of the power cord, and the heat dissipation effect is improved.

In an optional embodiment, the cooling fan system further includes the cooling fan and a flow guiding surrounding plate, the flow guiding surrounding plate is suitable for surrounding the cooling fan, and the flow guiding surrounding plate is provided with the first air outlet and the second air outlet. The flow guiding surrounding plate is suitable for playing a flow guiding role, by arranging the flow guiding surrounding plate to surround the cooling fan, the heat dissipation cold flow produced by the cooling fan can be centralized to flow out from the first air outlet and the second air outlet after being blocked and guided, so as to dissipate heat of the machine body and the power cord, the problem that the heat dissipation effect is poor due to the fact that the heat dissipation cold flow produced by the cooling fan is too dispersive can be effectively avoided, and the heat dissipation effect is effectively improved.

In an optional embodiment, the machine body is internally provided with a mounting chamber communicating with the cold air inlet and the cooling fan system, a drive motor is arranged in the mounting chamber, the drive motor is in driving connection with the cooling fan system and the hot air circulating system, and external cold air is suitable for entering the mounting chamber from the cold air inlet under the action of the cooling fan system and flowing towards the cooling fan system. By arranging the drive motor in the mounting chamber, the drive motor can be cooled while the external cold air flows through the mounting chamber and enters the cooling fan system to form heat dissipation cold flow, so that normal operation of the drive motor is guaranteed, and the performance stability and reliability of the drive motor are effectively improved.

In an optional embodiment, an inner wall of the mounting chamber is provided with a communicating port enabling the mounting chamber and the cooling fan system to communicate, and the communicating port is suitable for corresponding to at least part of the drive motor. The communicating port corresponds to at least part of the drive motor, so that the heat dissipation efficiency and heat dissipation effect of the drive motor can be effectively improved.

In an optional embodiment, a visible port is arranged at the top of the cooking chamber, a visible assembly closing the visible port is arranged at the visible port, and the visible assembly is at least partially located in the heat dissipation chamber. By arranging the visible port and the visible assembly closing the visible port at the top of the cooking chamber, the inside of the cooking chamber is visible, a user can visually observe a cooking state of food in the cooking chamber so as to better cook the food, and the cooking effect and the user's cooking experience can be effectively improved. At the same time, the visible assembly is at least partially arranged in the heat dissipation chamber, so that the heat dissipation cold flow in the heat dissipation chamber can be used to dissipate heat of the visible assembly, not only can the performance stability of the visible assembly be guaranteed, but also scalding of the user caused by heat transfer of a high temperature in the cooking chamber to a surface of the visible assembly can be avoided, and the user's use safety is improved.

In an optional embodiment, the cold air inlet and the exhaust outlet are suitable for being arranged at a rear side and a bottom of the machine body respectively. By arranging the cold air inlet and the exhaust outlet at the rear side and the bottom of the machine body respectively, the cold air inlet and the exhaust outlet can be hidden, so that the overall beauty of the air fryer product is improved.

In an optional embodiment, the power cord is suitable for being arranged at the rear side of the machine body and adjacent to the exhaust outlet. By arranging the power cord at the rear side of the machine body and adjacent to the exhaust outlet, the power cord can be hidden to improve the overall beauty of the air fryer product, and heat dissipation cold flow exhausted from the exhaust outlet can also be used to dissipate heat of the power cord to further improve the heat dissipation effect.

In an optional embodiment, an air outlet channel is arranged in the machine body, one end of the air outlet channel communicates with the atmosphere, the other end is provided with a mixed air outlet, and the mixed air outlet is suitable for communicating with the hot air circulating system and the cooling fan system. By arranging the mixed air outlet communicating with the hot air circulating system and the cooling fan system at one end of the air outlet channel, the circulating heat flow produced by the hot air circulating system and the heat dissipation cold flow produced by the cooling fan system can be mixed and exhausted, so that a temperature of exhausted airflow from the air outlet channel is lowered, the exhausted airflow is prevented from having an overhigh temperature to scald a user, and the user's use safety and user experience can be effectively improved.

Compared with the prior art, the present application has the beneficial effects:
in the present application, the air guiding chamber which communicates with the air outlet and opens downwards is arranged at the top of the cooking chamber, so that the airflow flowing out of the air outlet can be guided downwards to enter the frying basket through the top opening of the frying basket so as to heat food in the frying basket, and the situation that food is burnt because the circulating heat flow is directly blown into the frying basket can be avoided; and meanwhile, in the present application, the air guiding chamber is arranged to be annular, and the air guiding and distributing member is arranged in the air outlet to distribute and guide the airflow in the air outlet into the air guiding chamber from at least two directions, so that the airflow flowing out of the air outlet is guided into the frying basket relatively evenly to heat food in the frying basket, the problem that the airflow flowing out of the air outlet is regionally concentrated, the food in the frying basket is unevenly heated, and differences in cooking region are caused is avoided, the cooking effect is effectively improved, and the user experience is improved.

In the present application, the heating tube is fixed by the heating tube fixing structure, because no screw is required for fixation, compared to a screw fixing manner of a traditional tube clamp, dismounting and mounting of the heating tube fixing structure are simpler and more convenient, and the user experience can be effectively improved. At the same time, the heating tube fixing structure fixes the heating tube by bending fixation, so that the problems that screws are prone to loosening and falling due to vibration when fixed, the reliability and stability are poor, and the user experience is not good can be avoided.

In the present application, the top opening is arranged at the top of the cooking chamber, and the inner transparent plate for closing the top opening is arranged at the top opening, so that situations in the cooking chamber are visible, a user can better cook the food in the cooking chamber, and the cooking effect and cooking experience are effectively improved. At the same time, in the present application, the heat insulation ring separating the inner transparent plate and the visible panel and the decorative ring connected with the heat insulation ring are arranged on the top opening, so that a distance between the visible panel and the inner transparent plate is increased, a sufficient heat radiation buffer space exists between the inner transparent plate and the visible panel, the situation that the user is scalded due to the fact that a high temperature in the cooking chamber is directly thermally transferred to the visible panel is avoided, and the use safety and user experience are effectively improved.

In the present application, the annular heat dissipation channel and the air guiding and distributing member used to guide flow into the heat dissipation channel are arranged in the fryer body, so that airflow in the air outlet can be guided into the heat dissipation chamber relatively evenly, thereby dissipating heat of a machine body of the air fryer, the heat dissipation effect of the machine body can be effectively improved, and the user experience is improved. At the same time, the heat dissipation channel is arranged surrounding the outer side of the visible assembly, so that heat dissipation cold flow in the heat dissipation channel is used to dissipate heat of the visible assembly, scalding of a user caused by an overhigh temperature of the visible assembly is avoided, and the use safety is effectively improved. In addition, in the air fryer, the electric appliance is at least partially arranged in the heat dissipation channel, so that the heat dissipation cold flow in the heat dissipation channel is used to dissipate heat of the electric appliance, thereby guaranteeing normal operation of the electric appliance, and the performance stability and reliability of the air fryer product can be effectively improved.

In the present application, by arranging the heat dissipation chamber outside the cooking chamber and enabling the heat dissipation chamber to communicate with the cooling fan system, heat dissipation cold flow produced by the cooling fan system can be used to dissipate heat of the machine body, so that the situation that normal operation of an electric appliance in the machine body is affected by an overhigh temperature of the machine body is avoided. At the same time, in the present application, the second air outlet of the cooling fan system is arranged to correspond to the power cord, so that the heat dissipation cold flow produced by the cooling fan system can be used to dissipate heat of the power cord so as to avoid an overhigh temperature of the power cord, normal operation of the power cord and the electric appliance in the machine body is effectively guaranteed, and the use safety and user experience of the air fryer product are improved.

For the objects, technical solutions and advantages of embodiments of the present disclosure to be clearer, the technical solutions in the embodiments of the present disclosure will be clearly and completely described below in conjunction with the accompanying drawings in the embodiments of the present disclosure, and it is apparent that the described embodiments are a part of the embodiments of the present disclosure rather than all the embodiments. Assemblies in the embodiments of the present disclosure described and illustrated in the accompanying drawings here can be arranged and designed in various different configurations.

Thus, the following detailed description of the embodiments of the present disclosure provided in the accompanying drawings is not intended to limit the scope of the present disclosure as claimed, but is merely representative of selected embodiments of the present disclosure. Based on the embodiments of the present disclosure, all other embodiments obtained by those of ordinary skill in the art without creative work shall fall within the protection scope of the present disclosure.

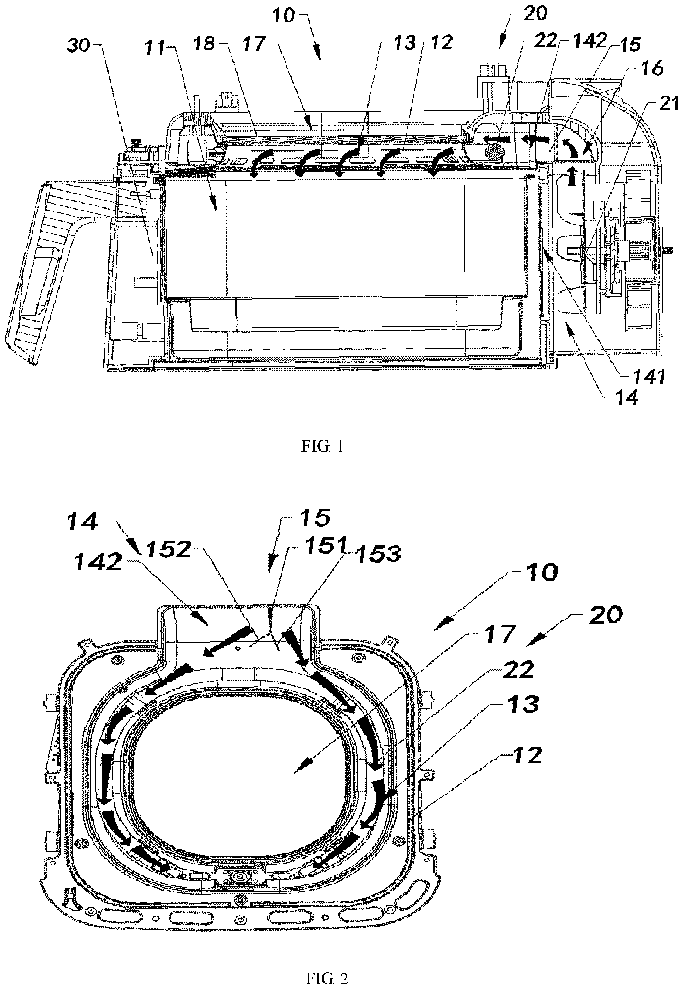

In a first aspect, as shown in FIG 1 to FIG 3, they are schematic diagrams of an air fryer with a good heating effect provided by the present application. The air fryer includes a fryer body 10, a cooking chamber 11 arranged in the fryer body 10 and a hot air circulating system 20 communicating with the cooking chamber. A frying basket 30 with a top opening is arranged in the cooking chamber 11, the top opening is arranged at the top of the frying basket 30, a vent hole communicating with the cooking chamber 11 is formed in a lower portion of the frying basket, the hot air circulating system 20 is suitable for producing circulating heat flow and introducing the circulating heat flow into the cooking chamber 11, and the circulating heat flow flows into the frying basket 30 to heat food in the frying basket 30.

As shown in FIG 1 and FIG 2, an air duct plate 12 is arranged at the top of the cooking chamber 11, the air duct plate 12 is provided with an air guiding chamber 13 which concaves upwards and opens downwards, the air guiding chamber 13 is preferred to be annular, and the top opening of the frying basket 30 is at least partially located under the air guiding chamber 13. A hot air chamber 14 is arranged in the fryer body 10, the hot air circulating system 20 is arranged in the hot air chamber 14, the hot air chamber 14 has an air inlet 141 and an air outlet 142, the air outlet 142 is suitable for communicating with the air guiding chamber 13, and the air inlet 141 is suitable for communicating with the cooking chamber 11. An air guiding and distributing member 15 is arranged in the air outlet 142, and the air guiding and distributing member 15 is suitable for guiding airflow in the air outlet 142 to enter the air guiding chamber 13 from at least two directions.

Specifically, after passing through the air outlet 142 and being distributed and guided into the air guiding chamber 13 by the air guiding and distributing member 15, the circulating heat flow produced by the hot air circulating system 20 is suitable for being guided downwards by the air guiding chamber 13, entering the frying basket 30 via the top opening of the frying basket 30, flowing out of the vent hole in the lower portion of the frying basket 30, and returning to the hot air chamber 14 via the air inlet hole 141. In the air fryer, the air guiding chamber 13 which communicates with the air outlet 142 and opens downwards is arranged at the top of the cooking chamber 11, so that the airflow flowing out of the air outlet 142 can be guided downwards to enter the frying basket 30 through the top opening of the frying basket 30 so as to heat food in the frying basket 30, and the situation that the food is burnt because the circulating heat flow is directly blown into the frying basket 30 can be avoided. At the same time, in the air fryer, the air guiding chamber 13 is arranged to be annular, and the air guiding and distributing member 15 is arranged in the air outlet 142 to distribute and guide the airflow in the air outlet 142 into the air guiding chamber 13 from at least two directions, so that the airflow flowing out of the air outlet 142 can be guided into the frying basket 30 relatively evenly to heat the food in the frying basket 30, the problem that the airflow flowing out of the air outlet 142 is regionally concentrated, the food in the frying basket 30 is unevenly heated, and differences in cooking region are caused is avoided, the cooking effect is effectively improved, and the user experience is improved.

As shown in FIG 2, in an optional embodiment, the air guiding and distributing member 15 includes a first air guiding and distributing portion 151, a second air guiding and distributing portion 152 and a third air guiding and distributing portion 153 having included angles with one another, the first air guiding and distributing portion 151 is suitable for extending towards the inside of the air outlet 142, and the second air guiding and distributing portion 152 and the third air guiding and distributing portion 153 are suitable for extending towards two sides of the air guiding chamber 13 respectively. In the air fryer, by means of the first air guiding and distributing portion 151, the second air guiding and distributing portion 152 and the third air guiding and distributing portion 153, the airflow in the air outlet 142 can be distributed and guided to two sides of the air guiding chamber 13, so that the airflow entering the frying basket 30 by being guided via the air guiding chamber 13 is distributed more evenly, and the cooking effect can be effectively improved.

As shown in FIG 1 and FIG 2, the hot air circulating system 20 includes a centrifugal fan 21, the air outlet 142 communicates with the hot air chamber 14 on one side of the centrifugal fan 21 through a hot air channel 16, and the first air guiding and distributing portion 151 is arranged in a side of the air outlet 142 close to a rotation direction of the centrifugal fan 21. In the air fryer, since airflow produced by the centrifugal fan 21 is spiral, the airflow produced by the centrifugal fan 21 has an air pressure difference. By arranging the first air guiding and distributing portion 151 in the side of the air outlet 142 close to the rotation direction of the centrifugal fan 21, the impact of the air pressure difference in the airflow produced by the centrifugal fan 21 on the air guiding and distributing member 15 can be reduced, and the airflow entering the air guiding chamber 13 by being guided via the air guiding and distributing member 15 is distributed more evenly, so that the airflow entering the frying basket 30 by being guided via the air guiding chamber 13 is distributed more evenly, and the cooking effect can be effectively improved.

As shown in FIG 2, a connection of the first air guiding and distributing portion 151 with the second air guiding and distributing portion 152 and the third air guiding and distributing portion 153 is suitable for forming an arc-shaped flow guiding structure. By arranging the connection of the first air guiding and distributing portion 151 with the second air guiding and distributing portion 152 and the third air guiding and distributing portion 153 as the arc-shaped flow guiding structure, resistance to airflow during air guiding and distributing by the air guiding and distributing member 15 can be reduced, and thus the airflow circulating efficiency is improved.

As shown in FIG 2, in an optional embodiment, extension lines of extending directions of the second air guiding and distributing portion 152 and the third air guiding and distributing portion 153 are suitable for being tangent to at least one position of an inner side wall of the air guiding chamber 13 respectively. In the air fryer, by arranging the extension lines of the extending directions of the second air guiding and distributing portion 152 and the third air guiding and distributing portion 153 to be tangent to at least one position of the inner side wall of the air guiding chamber 13 respectively, the airflow in the air outlet 142 can be efficiently guided into the air guiding chamber 13, and an airflow circulating speed in the cooking chamber 11 and the cooking efficiency of the air fryer can be effectively improved.

In an optional embodiment, the air guiding and distributing member 15 is preferably formed by extending the air duct plate 12 downwards. By integrally forming the air guiding and distributing member 15 and the air duct plate 12, the structures of the air duct plate 12 and the air guiding and distributing member 15 can be simplified, steps required for mounting the air guiding and distributing member 15 are reduced, and thus the production cost is lowered.

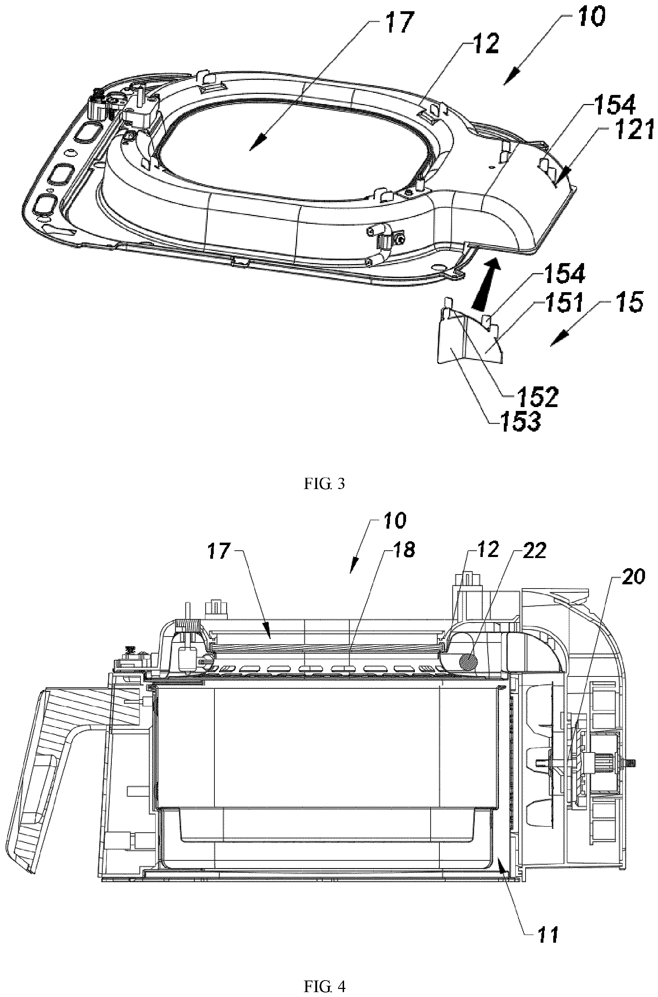

As shown in FIG 3, the air guiding and distributing member 15 is provided with a plurality of bendable bending portions 154, the air duct plate is provided with a plurality of fixing holes 121 for the bending portions 154 to pass, and the bending portions 154 are suitable for passing through the fixing holes 121 from the bottom of the air duct plate 12 and then abutting against the top of the air duct plate 12 after being bent. In the air fryer, by arranging the plurality of bendable bending portions 154 on the air guiding and distributing member 15, the bending portions can be bent to fix the air guiding and distributing member 15 to the air duct plate 12. At the same time, by arranging the plurality of bendable bending portions 154 on the air guiding and distributing member 15, not only can the connection stability of the air guiding and distributing member 15 and the air duct plate 12 be guaranteed, but also mounting, dismounting and replacement of the air guiding and distributing member 15 are facilitated, and the use convenience of the air guiding and distributing member 15 can be effectively improved.

As shown in FIG 3, the plurality of bending portions 154 are preferably arranged at positions, close to terminal extending ends, of the first air guiding and distributing portion 151, the second air guiding and distributing portion 152 and the third air guiding and distributing portion 153 respectively. In the air fryer, since the airflow produced by the centrifugal fan 21 is high-speed circulating airflow which has large impact force, by arranging the plurality of bending portions 154 at the positions, close to the terminal extending ends, of the first air guiding and distributing portion 151, the second air guiding and distributing portion 152 and the third air guiding and distributing portion 153 respectively, the possibility that the terminal extending ends of the first air guiding and distributing portion 151, the second air guiding and distributing portion 152 and the third air guiding and distributing portion 153 are deformed or displaced due to the impact of the airflow can be effectively lowered, and the performance stability and reliability of the air guiding and distributing member 15 are effectively improved. As shown in FIG 1, a window 17 communicating with the cooking chamber 11 is arranged at the top of the fryer body 10, a visible assembly 18 for closing the window 17 is arranged in the window 17, the visible assembly 18 is at least partially made of high-temperature-resistant transparent glass, high-temperature-resistant transparent plastic and other high-temperature-resistant transparent materials, the visible assembly 18 at least partially corresponds to the top opening of the frying basket 30, and the air guiding chamber 13 is arranged surrounding the window 17 on an outer edge of the window 17. By arranging the window 17 communicating with the cooking chamber 11 at the top of the fryer body 10, a user can visually observe a cooking state of the food in the cooking chamber 11, so that the food in the cooking chamber 11 is better cooked, and the cooking effect and user experience can be effectively improved.

As shown in FIG 1, the hot air circulating system 20 further includes a heating tube 22, the heating tube 22 is suitable for being arranged in the air guiding chamber 13 surrounding the outer edge of the window 17, the heating tube 22 is suitable for heating airflow in the air guiding chamber 13, and the centrifugal fan 21 is suitable for driving heated airflow to circularly flow so as to form circulating heat flow, so that food in the cooking chamber 11 is heated. In an optional embodiment, the heating tube 22 is preferably a light-wave tube. In the air fryer, by arranging the heating tube 22 surrounding the outer edge of the window 17 in the air guiding chamber 13, the heating tube 22 can better heat the airflow in the air guiding chamber 13. At the same time, the light-wave tube is selected as the heating tube 22, and the heating tube 22 is arranged in the air guiding chamber 13 surrounding the outer edge of the window 17, so that the heating tube 22 can illuminate the inside of the cooking chamber 11 while conducting heating so as to effectively improve the visibility and visual effect of the air fryer, the side wall of the air guiding chamber 13 may further be used to shield light produced by the heating tube 22, so as to avoid the interference of the light produced by the heating tube 22 on the visibility of the window 17, and the visibility and visual effect of the air fryer are effectively guaranteed.

In a second aspect, as shown in FIG 4 to FIG 7, they are schematic diagrams of an air fryer convenient to mount provided by the present application. The air fryer includes a fryer body 10 as well as a cooking chamber 11 arranged in the fryer body 10 and used for placing food to be cooked and a hot air circulating system 20 communicating with the cooking chamber 11. The hot air circulating system 20 is suitable for producing circulating airflow and introducing the circulating airflow into the cooking chamber 11. An air duct plate 12, a heating tube 22 and a heating tube fixing structure 80 are arranged in the cooking chamber 11. The heating tube 22 is suitable for being fixed to the inner side of the air duct plate 12 by the heating tube fixing structure 80, so as to heat the airflow which is introduced into the cooking chamber 11 by the hot air circulating system 20, so that circulating heat flow is created to heat the food in the cooking chamber 11.

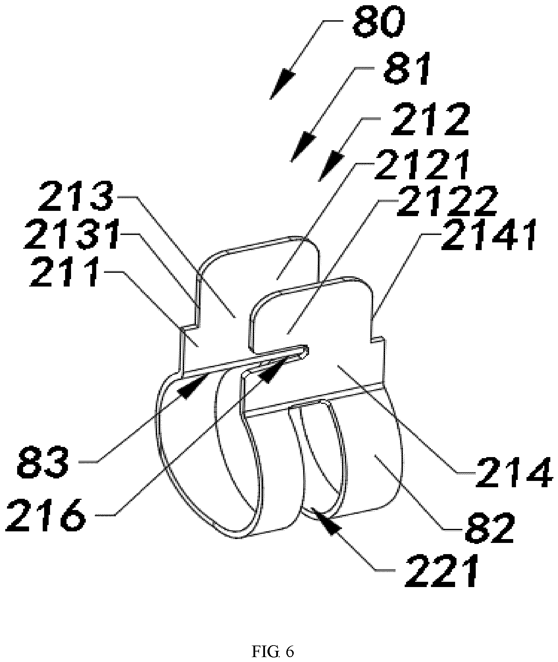

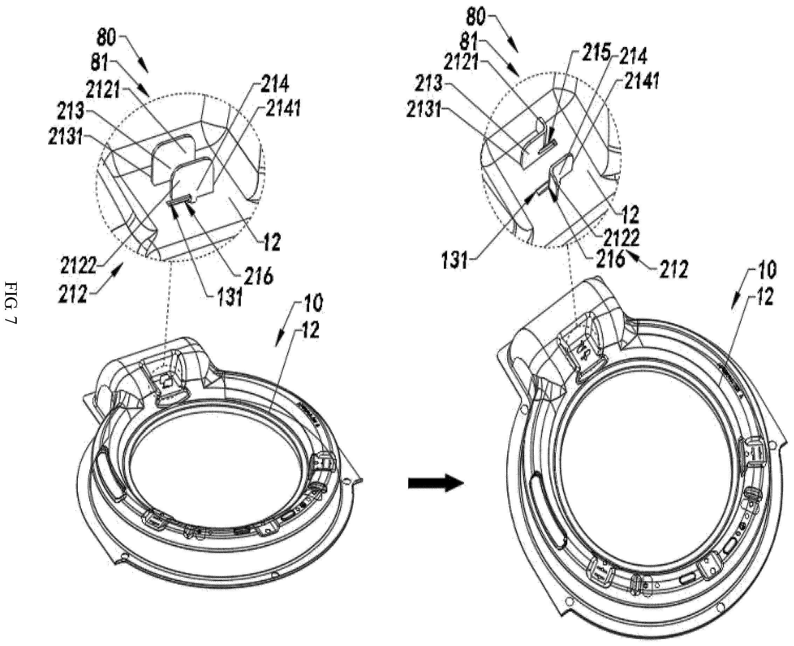

As shown in FIG 6 and FIG 7, the heating tube fixing structure 80 includes a connecting member 81 and a fixing member 82 connected with the connecting member 81 to clamp the heating tube 22, a limiting portion 211 is arranged on the connecting member 81, a bendable bending portion 212 is arranged at an end of the connecting member 81 close to the limiting portion 211, and the bending portion 212 has an extended state and a bent state. The air duct plate 12 is provided with a connecting hole 131 corresponding to the bending portion 212. In the extended state, the bending portion 212 is able to stretch into an outer side of the air duct plate 12 from an inner side of the air duct plate 12 through the connecting hole 131. When the bending portion 212 stretches into the outer side of the air duct plate 12 from the inner side of the air duct plate 12 through the connecting hole 131 and the bending portion 212 is adjusted to be in the bent state, the limiting portion 211 abuts against an inner side wall of the air duct plate 12, and the bending portion 212 abuts against an outer side wall of the air duct plate 12. In the air fryer, the heating tube fixing structure 80 fixes the heating tube 22 by bending the bending portion 212, such that the heating tube fixing structure 80 does not need screws for fixation, and compared to a screw fixing manner of a traditional tube clamp, the fixing manner of the heating tube fixing structure 80 enables the heating tube 22 to be dismounted and mounted more simply and conveniently, and the user experience can be effectively improved. At the same time, the heating tube fixing structure 80 fixes the heating tube 22 by bending fixation, so that the problems that screws are prone to loosening and falling due to vibration when fixed, the reliability and stability are poor, and user experience is not good can be avoided.

As shown in FIG 6, in an optional embodiment, the connecting member 81 preferably includes a first connecting member 213 and a second connecting member 214 arranged side by side, and the first connecting member 213 and the second connecting member 214 are suitable for being connected to two ends of the fixing member 82 respectively. In the air fryer, the first connecting member 213 and the second connecting member 214 are suitable for limiting the fixing member 82 in a left-right direction, and by arranging the first connecting member 213 and the second connecting member 214 at two ends of the fixing member 82 respectively, the connection stability of the heating tube fixing structure 80 can be effectively improved, and left-right shaking during fixation of the heating tube 22 by the heating tube fixing structure 80 is avoided.

As shown in FIG 6 and FIG 7, in an optional embodiment, the first connecting member 213 and the second connecting member 214 are provided with a first bending portion 2121 and a second bending portion 2122 respectively, and the first bending portion 2121 and the second bending portion 2122 are suitable for being bent away from each other respectively. In the air fryer, the first bending portion 2121 and the second bending portion 2122 are arranged to be bent away from each other respectively, so that not only can the heating tube fixing structure 80 be further limited in the left-right direction, but also it can be guaranteed that the first bending portion 2121 and the second bending portion 2122 have sufficient bendable space, such that the heating tube fixing structure 80 can be mounted and dismounted by a user by changing the states of the first bending portion 2121 and the second bending portion 2122.

As shown in FIG 6 and FIG 7, a first positioning portion 2131 is arranged on a side of the first connecting member 213 opposite to the first bending portion 2121, a second positioning portion 2141 is arranged on a side of the second connecting member 214 opposite to the second bending portion 2122, and when the first bending portion 2121 and the second bending portion 2122 are adjusted to be in a bent state, the first positioning portion 2131 and the second positioning portion 2141 abut against side walls, in at least two directions, of the connecting hole 131. The first positioning portion 2131 and the second positioning portion 2141 are suitable for limiting the heating tube fixing structure 80 in a front-back direction, and by arranging the first positioning portion 2131 and the second positioning portion 2141 on the first connecting member 213 and the second connecting member 214 respectively, the connection stability of the heating tube fixing structure 80 can be effectively improved, and front-back shaking during fixation of the heating tube 22 by the heating tube fixing structure 80 is avoided.

As shown in FIG 6 and FIG 7, the first connecting member 213 and the second connecting member 214 are provided with a first notch 215 and a second notch 216 respectively, the first notch and the second notch transversely extend to separate at least part of the bending portion 212 and the limiting portion 211, the first notch 215 and the second notch 216 have opposite extending directions, and widths of the first notch 215 and the second notch 216 match with a thickness of the air duct plate 12. The first connecting member 213 and the second connecting member 214 are provided with the first notch 215 and the second notch 216 respectively, and the first notch and the second notch transversely extend to separate at least part of the bending portion 212 and the limiting portion 211, so that not only can the problem that the first connecting member 213 and the second connecting member 214 are prone to deformation when the bending portion 212 is bent be avoided, but also the bending difficulty of the bending portion 212 can be effectively lowered, such that bending of the bending portion 212 is more labor-saving, and the user experience is effectively improved.

As shown in FIG 6, the middle of the fixing member 82 is suitable for being bent away from the first connecting member 213 and the second connecting member 214 to form an arc-shaped clamping structure matching with the heating tube 22, a limiting port 83 is suitable for being formed between two ends of the fixing member 82, and a size of the limiting port 83 is preferably set to be smaller than an external size of the heating tube 22. The middle of the fixing member 82 is arranged as the arc-shaped clamping structure matching with the heating tube, such that the fixing member 82 can better fix the heating tube 22. At the same time, the limiting port 83 is arranged at the two ends of the fixing member 82, and the size of the limiting port 83 is set to be smaller than the external size of the heating tube 22, so that the heating tube 22 can be better limited in the arc-shaped clamping structure of the fixing member 82, shaking damage to the heating tube 22 during the movement of the air fryer is avoided, and the stability and reliability of fixation of the heating tube 22 are effectively guaranteed.

As shown in FIG 6 and FIG 7, the first connecting member 213 and the second connecting member 214 are preferably of an axial symmetry structure. By arranging the first connecting member 213 and the second connecting member 214 as the axial symmetry structure, when mounted, the first connecting member 213 and the second connecting member 214 can be directly inserted into the connecting hole 131 without distinguishing between directions, the mounting difficulty of the heating tube fixing structure 80 can be effectively lowered, and the mounting convenience is improved.

In another optional embodiment, the connecting member 81 may also be of a tapered structure with a width being smaller gradually from an end close to the fixing member 82 to an end away from the fixing member 82, the limiting portion 211 is suitable for being formed at the position where the connecting member 81 and the connecting hole 131 have the same width, and when the bending portion 212 stretches into the outer side of the air duct plate 12 from the inner side of the air duct plate 12 through the connecting hole 131 and the bending portion 212 is adjusted to be in the bent state, the limiting portion 211 is suitable for abutting against the inner side wall of the air duct plate 12 close to the connecting hole 131, and the bending portion 212 is suitable for abutting against the outer side wall of the air duct plate 12. In the air fryer, the width of the connecting member 81 is set to be of the tapered structure of being smaller gradually from the end close to the fixing member 82 to the end away from the fixing member 82, such that when the heating tube fixing structure 80 and the air duct plate 12 are connected, after being inserted into the connecting hole 131 by a certain length, the connecting member 81 may be directly clamped in the connecting hole 131 to achieve limitation, not only can the heating tube fixing structure 80 be simplified, but also no distinguishing between directions is required when the connecting member 81 is inserted into the connecting hole 131 from the inner side of the air duct plate 12, the mounting difficulty of the heating tube fixing structure 80 is effectively lowered, and the mounting convenience is improved.

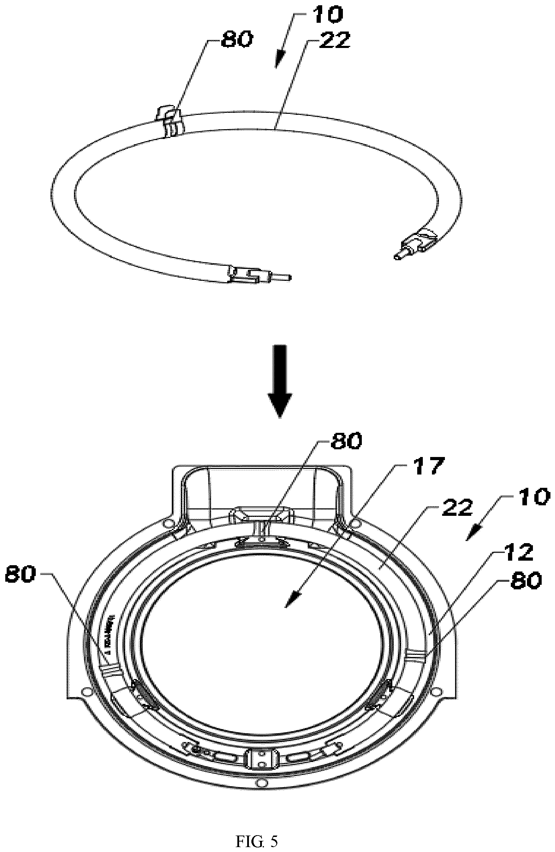

As shown in FIG 5 and FIG 6, in an optional embodiment, the fixing member 82 is suitable for being made of elastic high-temperature-resistant materials such as stainless steel and copper, and a strip-shaped notch 221 forming an included angle with the heating tube 22 is arranged in the middle of the fixing member 82. In the air fryer, by manufacturing the fixing member 82 from the elastic high-temperature-resistant materials such as stainless steel and copper, not only can the impact of a high temperature produced by the heating tube 22 on the performance of the fixing member 82 be avoided, but also the fixing member 82 can adapt to thermal expansion and contraction of the heating tube 22, avoiding clamping damage to the heating tube 22 during thermal expansion of the heating tube 22, and thus the performance stability and reliability of the heating tube fixing structure 80 are guaranteed. At the same time, by arranging the strip-shaped notch 221 forming the included angle with the heating tube 22 in the middle of the fixing member 82, the fixing member 82 can better match with the heating tube 22, and thus the heating tube 22 is better fixed.

As shown in FIG 4, a window 17 communicating with the cooking chamber 11 is further arranged at the top of the fryer body 10, a visible assembly 18 for closing the window 17 and having a visible function is arranged at the window 17, the heating tube 22 is suitable for being arranged surrounding an outer edge of the window 17, and the heating tube 22 is preferably a light-wave tube. The light-wave tube is selected as the heating tube 22, so that the heating tube 22 can illuminate the inside of the cooking chamber 11 while conducting heating so as to improve the visibility and visual effect in the cooking chamber 11, a user can better observe a cooking state of food in the cooking chamber 11, the heating tube 22 and the heating tube fixing structure 80 may further have a higher fit degree, an thus the heating tube fixing structure 80 can better fix the heating tube 22.

As shown in FIG 5, in the air fryer, a plurality of heating tube fixing structures 80 are arranged in an extending direction of the heating tube 22, and the heating tube 22 is suitable for being fixed to the air duct plate 12 by the plurality of heating tube fixing structures 80. By arranging the plurality of heating tube fixing structures 80 in the air fryer to fix the heating tube 22, the heating tube 22 can be fixed in multiple directions, so that the stability and reliability of fixation of the heating tube 22 are effectively improved.

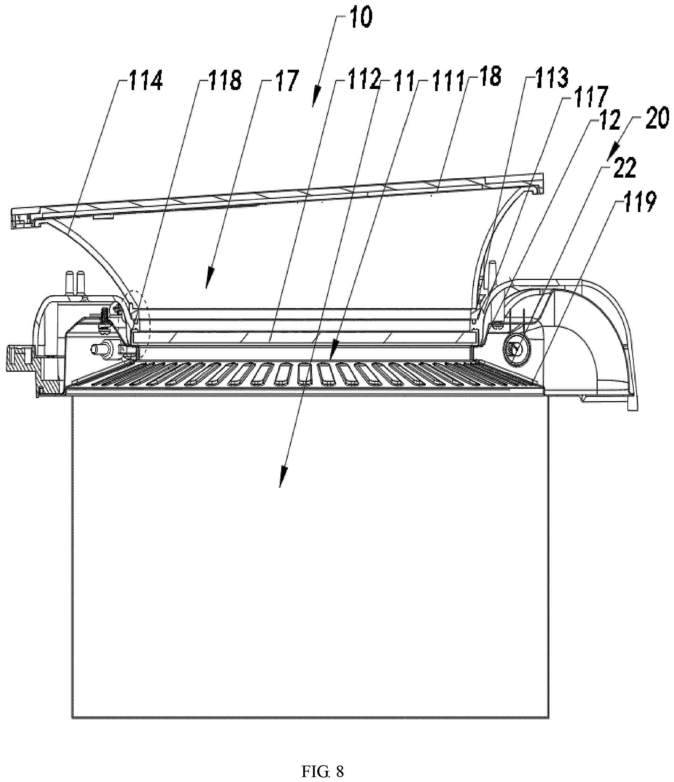

In a third aspect, as shown in FIG 8 to FIG 10, they are schematic diagrams of an air fryer with a visible top provided by the present application. The air fryer includes a fryer body 10, a cooking chamber 11 arranged in the fryer body 10 and a hot air circulating system 20 communicating with the cooking chamber 11. The interior of the cooking chamber 11 is suitable for placing food to be cooked, the hot air circulating system 20 is suitable for producing circulating heat flow and introducing the circulating heat flow into the cooking chamber 11, so as to heat the food in the cooking chamber 11.

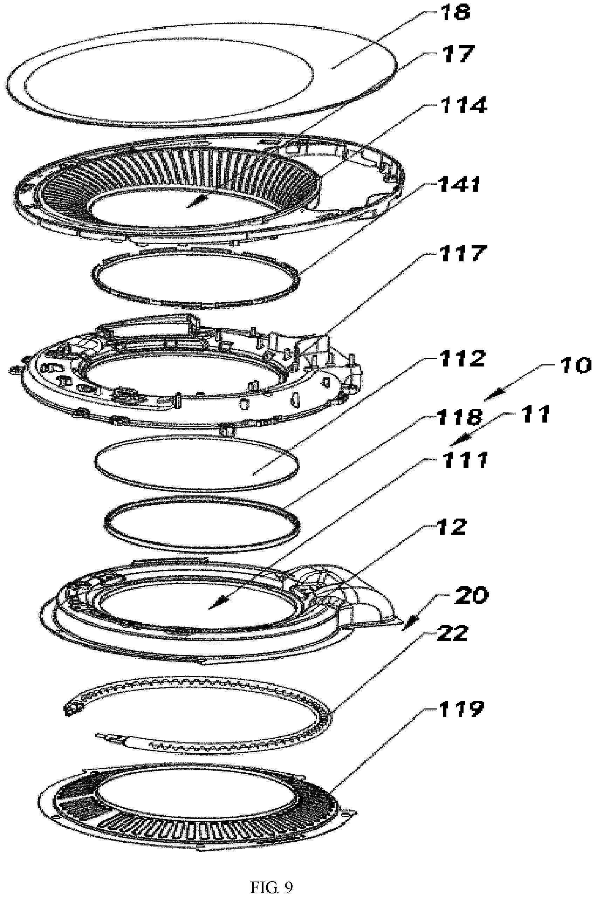

As shown in FIG 8 and FIG 9, a top opening 111 is arranged at the top of the cooking chamber 11, an inner transparent plate 112 used to close the top opening 111 is arranged at the top opening 111, and the inner transparent plate 112 is preferably made of high-temperature-resistant transparent glass, high-temperature-resistant transparent plastic and other high-temperature-resistant transparent materials. By manufacturing the inner transparent plate 112 from the high-temperature-resistant transparent materials, it can be guaranteed that the performance of the inner transparent plate is not affected by a high temperature in the cooking chamber 11 while visibility is achieved, and the performance stability and reliability of the inner transparent plate 112 are effectively guaranteed.

As shown in FIG 8 and FIG 9, a heat insulation ring 113 and a decorative ring 114 are further arranged on the top opening 111. The heat insulation ring 113 is suitable for being arranged between the top opening 111 and the decorative ring 114. A hole corresponding to the top opening 111 is formed in the middle of the heat insulation ring 113, a lower side of the heat insulation ring 113 is connected with the fryer body 10, and an upper side is connected with a lower side of the decorative ring 114. A window 17 corresponding to the top opening 111 is arranged in the middle of the decorative ring 114, a visible assembly 18 for closing the window 17 is arranged at an upper opening of the window 17, and the visible assembly 18 is entirely or partially made of transparent materials such as transparent glass and transparent plastic. By manufacturing the visible panel from the transparent materials, it can be effectively guaranteed that situations in the cooking chamber 11 are visible. In the air fryer, the top opening 111 is arranged at the top of the cooking chamber 11, and the inner transparent plate 112 for closing the top opening 111 is arranged at the top opening 111, so that situations in the cooking chamber 11 are visible, a user can visually observe cooking situations of food in the cooking chamber 111, and thus the food in the cooking chamber 11 is better cooked, and the cooking effect and the user's cooking experience can be effectively improved. At the same time, in the air fryer, the heat insulation ring 113 separating the inner transparent plate 112 and the visible assembly 18 and the decorative ring 114 connected with the heat insulation ring 113 are arranged on the top opening 111, so that a distance between the visible assembly 18 and the inner transparent plate 112 is increased, a sufficient heat radiation buffer space exists between the inner transparent plate 112 and the visible assembly 18, the situation that the user is scalded due to the fact that a high temperature in the cooking chamber 11 is directly thermally transferred to the visible assembly 18 is avoided, and the use safety and user experience are effectively improved.

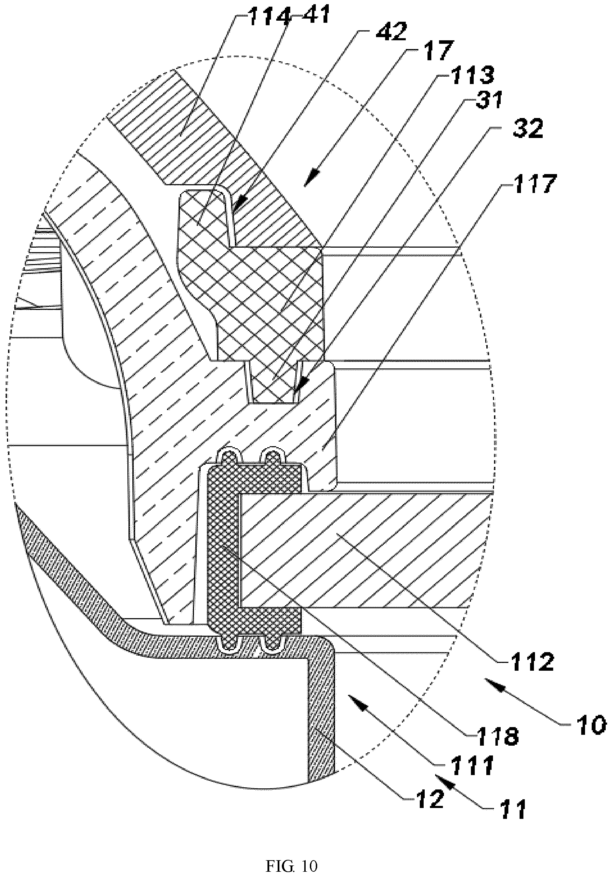

As shown in FIG 8 and FIG 10, an air duct plate 12 defining the top opening 111 and an upper machine core 117 are arranged at the top of the cooking chamber 11, the upper machine core 117 is located above the air duct plate 12, and a periphery of the inner transparent plate 112 is suitable for being pressed and fixed to the air duct plate 12 by the upper machine core 117. In the air fryer, the inner transparent plate 112 is directly pressed and fixed to the air duct plate 12 by the upper machine core 117, so that not only can dismounting and mounting difficulties of the inner transparent plate 112 be lowered effectively, but also parts required for fixing the inner transparent plate 112 are reduced on the premise of guaranteeing connection stability, and thus the production cost and use cost are lowered.

As shown in FIG 9 and FIG 10, an outer edge of the inner transparent plate 112 is sleeved with a sealing ring 118 made of elastic high-temperature-resistant materials such as rubber and silica gel, and the inner transparent plate 112 is suitable for being in tight fit with the air duct plate 12 and the upper machine core 117 through the sealing ring 118. The sealing ring 118 is suitable for playing a sealing role, and the outer edge of the inner transparent plate 112 is sleeved with the sealing ring 118 so as to be in tight fit with the air duct plate 12 and the upper machine core 117, so that cooking efficiency can be effectively prevented from being influenced by outward flowing of circulating heat flow in the cooking chamber 11, and the situation that normal operation of an electric appliance in the fryer body is affected due to the fact that the circulating heat flow in the cooking chamber 11 flows outwards to other positions of the fryer body 10 can further be avoided. At the same time, the sealing ring 118 is manufactured from the elastic high-temperature-resistant materials, so that the sealing ring 118 can be prevented from being influenced by heat transfer of the high temperature in the cooking chamber 11, and thus the sealing performance of the sealing ring 118 is effectively guaranteed. As shown in FIG 10, the heat insulation ring 113 is arranged above the upper machine core 117, a first spigot structure is arranged between the heat insulation ring 113 and the upper machine core 117, and the first spigot structure includes a plurality of first spigot portions 31 and first spigot grooves 32 matching with the first spigot portions 31. One of the heat insulation ring 113 and the upper machine core 117 is provided with the plurality of first spigot portions 31, the other one is provided with the plurality of first spigot grooves 32, and the heat insulation ring 113 is suitable for being in spigot connection with the upper machine core 117 through the first spigot portions 31 and the first spigot grooves 32. By spigot connection between the heat insulation ring 113 and the upper machine core 117, not only can dismounting and mounting be convenient, but also a connection structure can be simplified, parts required for connection are reduced, and the production cost and use cost are lowered.

As shown in FIG 10, a second spigot structure is arranged between the decorative ring 114 and the heat insulation ring 113, and the second spigot structure includes a plurality of second spigot portions 41 and second spigot grooves 42 matching with the second spigot portions 41. One of the decorative ring 114 and the heat insulation ring 113 is provided with the plurality of second spigot portions 41, the other one is provided with the plurality of second spigot grooves 42, and the decorative ring 114 is suitable for being in spigot connection with the heat insulation ring 113 through the second spigot portions 41 and the second spigot grooves 42. In the air fryer, by spigot connection between the heat insulation ring 113 and the decorative ring 114, not only can dismounting and mounting be convenient, but also a connection structure can be simplified, parts required for connection are reduced, and the production cost and use cost are lowered.

In an optional embodiment, the heat insulation ring 113 is suitable for being made of high-temperature-resistant heat insulation materials such as heat insulation ceramic, XPS materials and high-temperature alloys. By manufacturing the heat insulation ring 113 from the high-temperature-resistant heat insulation materials, not only can the impact on performance of the heat insulation ring 113 due to heat transfer of a high temperature be avoided, but also heat can be insulated effectively, and the performance of the decorative ring 114 is prevented from being influenced by the transfer of the high temperature in the cooking chamber 11 to the decorative ring 114.

As shown in FIG 8 and FIG 9, the decorative ring 114 is preferably of a horn-shaped structure which opens upwards, a middle channel of the decorative ring is suitable for forming the window 17, and a lower opening of the window 17 corresponds to the top opening 111. By arranging the decorative ring 114 to be of the horn-shaped structure which opens upwards, the volume of the heat radiation buffer space between the visible assembly 18 and the inner transparent plate 112 can be effectively increased while the visual effect is guaranteed, and thus the heat insulation effect is improved.

As shown in FIG 8 and FIG 9, the visible assembly 18 is suitable for being of an oblique structure inclining from one side to the other side of the visible assembly 18. By arranging the visible assembly 18 to be the oblique structure inclining from one side to the other side, the situation that the visibility and overall beauty of the air fryer are affected due to the fact that impurities such as external liquids and dust are accumulated on the visible assembly 18 can be avoided, and the user experience is effectively improved.

As shown in FIG 8 and FIG 9, the hot air circulating system 20 includes a heating tube 22 and a thermal circulating fan, the heating tube 22 is suitable for heating air in the cooking chamber 11, and the thermal circulating fan is suitable for driving the heated air to circularly flow so as to form circulating heat flow, so that food in the cooking chamber 11 is heated. In an optional embodiment, the heating tube 22 is suitable for being arranged surrounding an outer edge of the top opening 111 of the cooking chamber 11, and the heating tube 22 is preferably a light-wave tube. In the air fryer, by arranging the heating tube 22, namely the light-wave tube, on the outer edge of the top opening 111, the inside of the cooking chamber 11 can be illuminated while the air in the cooking chamber 11 is heated, and thus the visibility and visual effect in the cooking chamber 11 are improved.

As shown in FIG 8 and FIG 9, a light guiding barrier 119 is further arranged on the outer edge of the top opening 111, the heating tube 22 is arranged outside the light guiding barrier 119, and light produced by the heating tube 22 is suitable for being guided to the bottom of the cooking chamber 11 by the light guiding barrier 119. The light guiding barrier 119 is suitable for playing light guiding and shielding roles, and by arranging the light guiding barrier 119 on the outer edge of the top opening 111, part of the light produced by the heating tube 22 can be shielded to prevent the light produced by the heating tube 22 from affecting the visibility of the top opening 111, and the light produced by the heating tube 22 can further be guided to the bottom of the cooking chamber 11, so that the inside of the cooking chamber 11 is illuminated, and the visibility and visual effect in the cooking chamber 11 can be further improved.

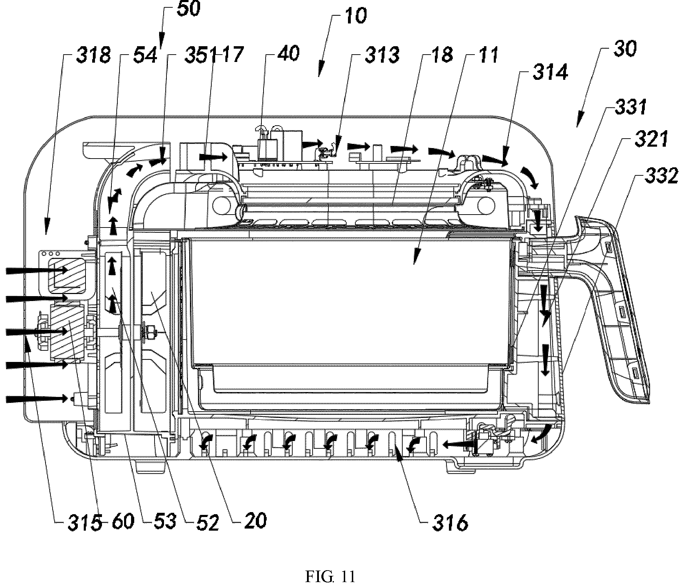

In a fourth aspect, as shown in FIG 11 to FIG 12, they are schematic diagrams of a novel air fryer with a rear heat dissipation system provided by the present application. The air fryer includes a fryer body 10, a cooking chamber 11 arranged in the fryer body 10 and a hot air circulating system 20 communicating with the cooking chamber 11 and used to convey circulating heat flow into the cooking chamber 11. A frying basket 30 used to carry food is arranged in the cooking chamber 11, and the frying basket 30 has a top opening. After entering the cooking chamber 11, the circulating heat flow produced by the hot air circulating system 20 is suitable for flowing into the frying basket 30 from the top opening of the frying basket 30 so as to heat food in the frying basket 30.

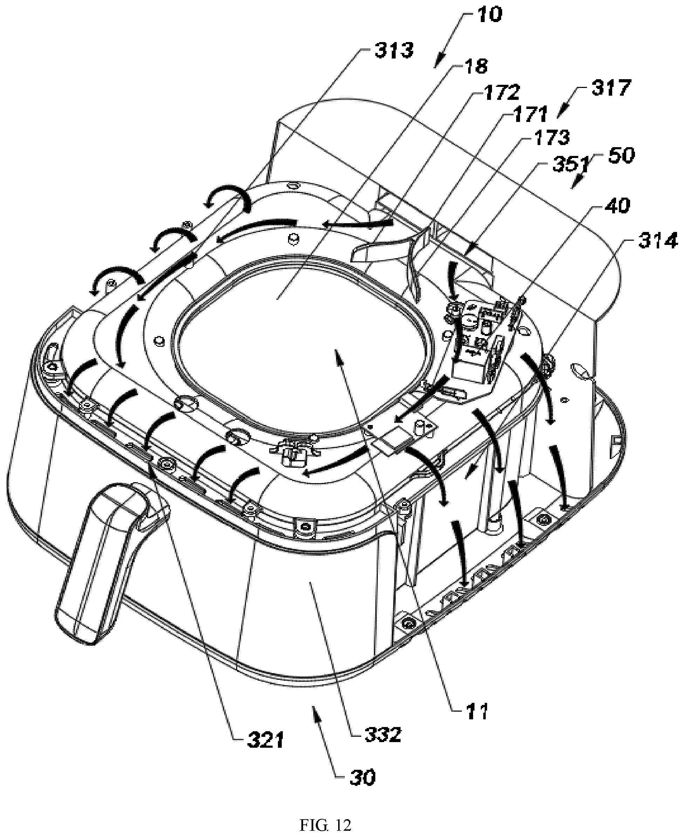

As shown in FIG 11 and FIG 12, a visible assembly 18 is arranged at the top of the cooking chamber 11, an annular heat dissipation channel 313 is arranged on an outer side of the visible assembly 18, and at least part of electric appliances 40 such as a control circuit and a circuit board are arranged in the heat dissipation channel 313. A heat dissipation chamber 314 is arranged outside the cooking chamber 11, and the heat dissipation chamber 314 is suitable for communicating with the heat dissipation channel 313. A cooling fan system 50 is arranged in the fryer body 10, the cooling fan system 50 has a heat dissipation air outlet 351, and the cooling fan system 50 is suitable for communicating with the heat dissipation channel 313 through the heat dissipation air outlet 351. The fryer body 10 is provided with a heat dissipation air inlet 315 and an exhaust outlet 316, and the heat dissipation air inlet 315 and the exhaust outlet 316 are suitable for communicating with the cooling fan system 50 and the heat dissipation chamber 314 respectively. A heat dissipation air guiding and distributing member 317 is arranged in the heat dissipation air outlet 351, and the heat dissipation air guiding and distributing member 317 is suitable for guiding airflow in the heat dissipation air outlet 351 to enter the heat dissipation channel 313 from at least two directions. Specifically, in the air fryer, after entering the cooling fan system 50 through the heat dissipation air inlet 315 to form heat dissipation cold flow, external cold air is suitable for flowing out from the heat dissipation air outlet 351, flowing into the heat dissipation channel 313 after being distributed and guided by the heat dissipation air guiding and distributing member 317, entering the heat dissipation chamber 314 by being diffused by the heat dissipation channel 313 to cool the machine body, and being exhausted from the exhaust outlet 316.

As shown in FIG 11 and FIG 12, in the air fryer, the annular heat dissipation channel 313 and the heat dissipation air guiding and distributing member 317 used to guide flow into the heat dissipation channel 313 are arranged in the fryer body 10, so that airflow in the heat dissipation air outlet 351 can be guided into the heat dissipation chamber 314 relatively evenly, thereby dissipating heat of the machine body of the air fryer, the heat dissipation effect of the machine body can be effectively improved, and the user experience is improved. At the same time, in the air fryer, the heat dissipation channel 313 is arranged surrounding the outer side of the visible assembly 18, so that heat dissipation cold flow in the heat dissipation channel 313 is used to dissipate heat of the visible assembly 18, scalding of a user caused by an overhigh temperature of the visible assembly 18 is avoided, and the use safety is effectively improved. In addition, in the air fryer, at least part of the electric appliances 40 are arranged in the heat dissipation channel 313, so that the heat dissipation cold flow in the heat dissipation channel 313 is used to dissipate heat of the electric appliances 40, thereby guaranteeing normal operation of the electric appliances 40, and the performance stability and reliability of the air fryer product can be effectively improved.

As shown in FIG 12, the heat dissipation air guiding and distributing member 317 includes a first flow guiding portion 171, a second flow guiding portion 172 and a third flow guiding portion 173 having included angles with one another, the first flow guiding portion 171 is suitable for extending towards the inside of the heat dissipation air outlet 351, and the second flow guiding portion 172 and the third flow guiding portion 173 are suitable for extending towards the inside of the heat dissipation channel 313 on two sides of the visible assembly 18 respectively. By means of the first flow guiding portion 171, the second flow guiding portion 172 and the third flow guiding portion 173, the airflow in the heat dissipation air outlet 351 can be distributed and guided to two sides of the heat dissipation channel 313, so that the airflow entering the heat dissipation chamber 314 via the heat dissipation channel 313 is distributed more evenly, and the heat dissipation effect can be effectively improved.

As shown in FIG 12, in an optional embodiment, a connection of the first flow guiding portion 171 with the second flow guiding portion 172 and the third flow guiding portion 173 is suitable for forming an arc-shaped flow guiding structure. By arranging the connection of the first flow guiding portion 171 with the second flow guiding portion 172 and the third flow guiding portion 173 as the arc-shaped flow guiding structure, resistance to airflow during air guiding and distributing by the heat dissipation air guiding and distributing member 317 can be reduced, and thus the airflow circulating efficiency is improved, thereby improving the heat dissipation effect.

As shown in FIG 12, in an optional embodiment, the electric appliances 40 are arranged adjacent to the second flow guiding portion 172 and/or the third flow guiding portion 173. By arranging the electric appliances 40 adjacent to the second flow guiding portion 172 and/or the third flow guiding portion 173, the airflow in the heat dissipation air outlet 351 can be directly used to dissipate heat of the electric appliances 40 after being distributed and guided by the heat dissipation air guiding and distributing member 317, and thus the heat dissipation efficiency and heat dissipation effect of the electric appliances 40 can be effectively improved. As shown in FIG 11, the cooling fan system 50 includes a heat dissipation centrifugal fan 52, and the electric appliances 40 are preferably arranged in the heat dissipation channel 313 close to one side of a rotation direction of the heat dissipation centrifugal fan 52. In the air fryer, since airflow produced by the heat dissipation centrifugal fan 52 is spiral airflow, one side of the heat dissipation air outlet 351 close to the rotation direction of the heat dissipation centrifugal fan 52 has a relatively high air pressure and airflow density, and by arranging the electric appliances 40 in the heat dissipation channel 313 close to one side of the rotation direction of the heat dissipation centrifugal fan 52, the heat dissipation efficiency and heat dissipation effect of the electric appliances 40 can be effectively improved.

As shown in FIG 11, the fryer body 10 is internally provided with a mounting chamber 318 communicating with the heat dissipation air inlet 315 and the cooling fan system 50, a drive system 60 being in driving connection with the cooling fan system 50 and the hot air circulating system 20 after extending is arranged in the mounting chamber 318, and external cold air is suitable for entering the mounting chamber 318 from the heat dissipation air inlet 315 under the action of the cooling fan system 50 and flowing towards the exhaust outlet 316. In the air fryer, by enabling the heat dissipation air inlet 315 to communicate with the mounting chamber 318 and arranging the drive system 60 in the mounting chamber 318, the drive system 60 can be cooled while air enters, and thus normal operation of the drive system 60 is guaranteed, and the performance stability and reliability of the drive system 60 can be effectively improved.

As shown in FIG 11, the cooling fan system 50 further includes a flow guiding surrounding plate 53, the flow guiding surrounding plate 53 is suitable for being arranged surrounding at least part of the heat dissipation centrifugal fan 52, a flow guiding channel 54 formed by the extension of the flow guiding surrounding plate 53 is arranged above the flow guiding surrounding plate 53, and the flow guiding channel 54 is suitable for communicating with the heat dissipation air outlet 351. The flow guiding surrounding plate 53 is suitable for playing a flow guiding role, by means of the flow guiding surrounding plate 53, airflow thrown out by the heat dissipation centrifugal fan 52 can be blocked and guided and centralized at the heat dissipation air outlet 351 to flow out, the problem that the heat dissipation effect is poor due to the fact that the heat dissipation cold flow produced by the heat dissipation centrifugal fan 52 is too dispersive is avoided, and the heat dissipation efficiency and heat dissipation effect are effectively improved.

As shown in FIG 11, a side opening communicating with the cooking chamber 11 is formed in a side portion of the fryer body 10, the frying basket 30 is detachably arranged in the cooking chamber 11 through the side opening, the frying basket 30 includes a frying basket body 331 arranged in the cooking chamber 11 and used to carry food and a frying basket door plate 332 fixedly connected with the frying basket body 331 and used to close the side opening, a cold air channel 321 is arranged in the frying basket door plate, and two ends of the cold air channel 321 are suitable for communicating with the heat dissipation channel 313 and the exhaust outlet 316 respectively. By arranging the cold air channel 321 communicating with the heat dissipation channel 313 and the exhaust outlet 316 in the frying basket door plate 332, heat dissipation of the frying basket door plate 332 can be achieved, the problem of scalding of a user caused by heat transfer of a high temperature in the cooking chamber 11 to the frying basket door plate 332 is avoided, and the use safety and user experience are effectively improved.

As shown in FIG 11 and FIG 12, in an optional embodiment, the heat dissipation chamber 314 is suitable for being arranged surrounding at least part of the cooking chamber 11. By arranging the heat dissipation chamber 314 surrounding the cooking chamber 11, heat dissipation of an outer wall of the cooking chamber 11 can be achieved, damage to the electric appliances 40 outside the cooking chamber 11 caused by heat transfer of the high temperature in the cooking chamber 11 to the outside of the cooking chamber 11 is avoided, and the performance stability and reliability of the air fryer can be effectively improved.

As shown in FIG 11, in an optional embodiment, the heat dissipation air inlet 315 and the exhaust outlet 316 are suitable for being arranged at a rear side and a bottom of the fryer body 10 respectively. By arranging the heat dissipation air inlet 315 and the exhaust outlet 316 at the rear side and the bottom of the fryer body 10 respectively, the heat dissipation air inlet 315 and the exhaust outlet 316 can be hidden, so that the overall beauty of the air fryer product is improved.

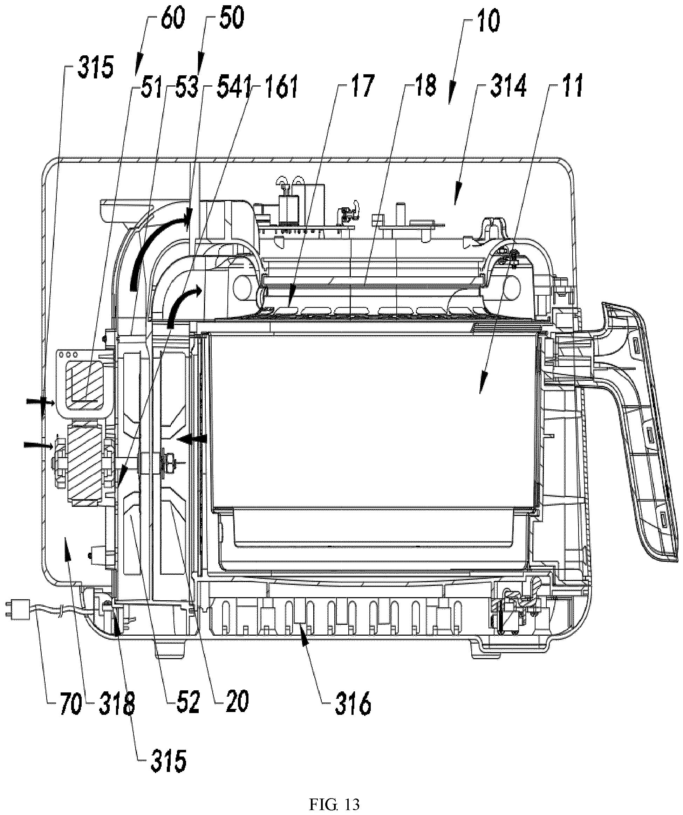

In a fifth aspect, as shown in FIG 13 to FIG 16, they are schematic diagrams of an air fryer with a good heat dissipation effect provided by the present application. The air fryer includes a fryer body 10, a cooking chamber 11 arranged in the fryer body 10 and a hot air circulating system 20 communicating with the cooking chamber 11 and used to produce circulating heat flow. A frying basket with a top opening is arranged in the cooking chamber 11, and an accommodating chamber used to place food is arranged in the frying basket. The circulating heat flow produced by the hot air circulating system 20 is suitable for being introduced into the cooking chamber 11, so as to heat the food in the cooking chamber 11.

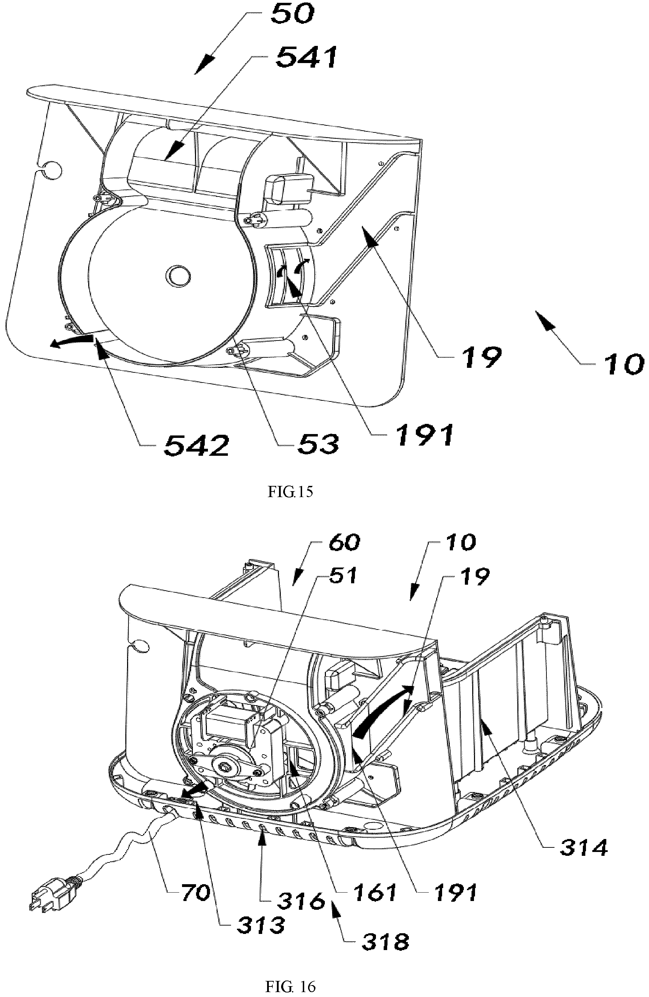

As shown in FIG 13 and FIG 16, a power cord 70 is arranged outside the fryer body 10, one end of the power cord 70 is provided with a plug capable of being connected with an external power source, the other end is suitable for extending into the fryer body 10 to be connected with electric appliances such as a control circuit and a circuit board in the fryer body 10, and the end of the power cord 70 extending into the fryer body 10 is suitable for being fixed on the fryer body 10. The fryer body 10 is internally provided with a heat dissipation chamber 314 and a cooling fan system 50 communicating with the heat dissipation chamber 314 and used to produce heat dissipation cold flow, and the heat dissipation chamber 314 is arranged outside the cooking chamber 11 and at least partially surrounds the cooking chamber 11. The cooling fan system 50 includes a first air outlet 541 and a second air outlet 542, the first air outlet 541 is suitable for communicating with the heat dissipation chamber 314, and the second air outlet 542 is suitable for corresponding to the power cord 70. A machine body is provided with a heat dissipation air inlet 315 and an exhaust outlet 316, the heat dissipation air inlet 315 is suitable for communicating with the cooling fan system 50, and the exhaust outlet 316 is suitable for communicating with the heat dissipation chamber 314. When the air fryer is in an operating state, external cold air is suitable for entering the cooling fan system 50 through the heat dissipation air inlet 315 to form the heat dissipation cold flow, part of the heat dissipation cold flow produced by the cooling fan system 50 is suitable for entering the heat dissipation chamber 314 through the first air outlet 541 to dissipate heat of the fryer body 10, and the other part is suitable for flowing out through the second air outlet 542 to dissipate heat of the power cord 70.

As shown in FIG 13 and FIG 16, in the air fryer, by arranging the heat dissipation chamber 314 outside the cooking chamber 11 and enabling the heat dissipation chamber 314 to communicate with the cooling fan system 50, the heat dissipation cold flow produced by the cooling fan system 50 can be used to dissipate heat of the fryer body 10, so that the situation that normal operation of the electric appliances in the fryer body 10 is affected by an overhigh temperature of the fryer body 10 is avoided. At the same time, in the air fryer, the second air outlet 542 of the cooling fan system 50 is arranged to correspond to the power cord 70, so that the heat dissipation cold flow produced by the cooling fan system 50 can be used to dissipate heat of the power cord 70 so as to avoid an overhigh temperature of the power cord 70, normal operation of the power cord 70 and the electric appliances in the fryer body 10 is effectively guaranteed, and the use safety and user experience of the air fryer product are improved.

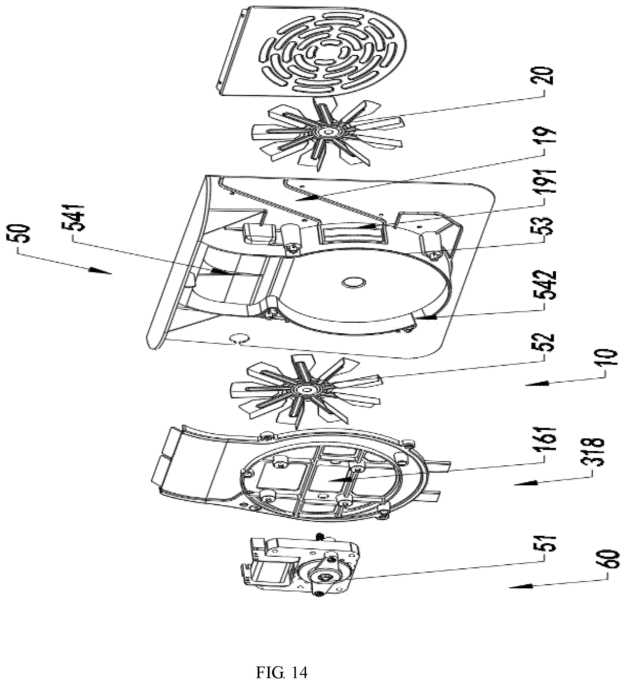

As shown in FIG 13 and FIG 14, in an optional embodiment, the cooling fan system 50 includes a heat dissipation centrifugal fan 52, and the second air outlet 542 is suitable for corresponding to at least part of the heat dissipation centrifugal fan 52. In the air fryer, the second air outlet 542 corresponds to at least part of the heat dissipation centrifugal fan 52, so that the heat dissipation cold flow produced by the heat dissipation centrifugal fan 52 can better flow out from the second air outlet 542 so as to dissipate heat of the power cord 70, and the heat dissipation effect and heat dissipation efficiency can be effectively improved.

As shown in FIG 15, in an optional embodiment, a heat dissipation channel 313 communicating with the exhaust outlet 316 and the second air outlet 542 is arranged in the fryer body 10, and the end of the power cord 70 extending into the fryer body 10 is at least partially located in the heat dissipation channel 313. The heat dissipation channel 313 is arranged in the fryer body 10, and at least part of the power cord 70 is arranged in the heat dissipation channel 313, so that the heat dissipation cold flow produced by the heat dissipation centrifugal fan 52 can better dissipate heat of the power cord 70, and the heat dissipation effect is improved.

As shown in FIG 13 to FIG 15, the cooling fan system 50 further includes a flow guiding surrounding plate 53, the flow guiding surrounding plate 53 is suitable for surrounding the heat dissipation centrifugal fan 52, and the flow guiding surrounding plate 53 is provided with the first air outlet 541 and the second air outlet 542. The flow guiding surrounding plate 53 is suitable for playing a flow guiding role, by arranging the flow guiding surrounding plate 53 to surround the heat dissipation centrifugal fan 52, the heat dissipation cold flow produced by the heat dissipation centrifugal fan 52 can be centralized to flow out from the first air outlet 541 and the second air outlet 542 after being blocked and guided, so as to dissipate heat of the fryer body 10 and the power cord 70, the problem that the heat dissipation effect is poor due to the fact that the heat dissipation cold flow produced by the heat dissipation centrifugal fan 52 is too dispersive can be effectively avoided, and the heat dissipation effect is effectively improved.

As shown in FIG 13, the fryer body 10 is internally provided with a mounting chamber 318 communicating with the heat dissipation air inlet 315 and the cooling fan system 50, a drive system 60 is arranged in the mounting chamber 318, the drive system 60 includes a drive motor 51 and a fixing assembly used to mount the drive motor 51, a rotating shaft of the drive motor 51 is suitable for being in driving connection with the cooling fan system 50 and the hot air circulating system 20 after extending, and external cold air is suitable for entering the mounting chamber 318 from the heat dissipation air inlet 315 under the action of the cooling fan system 50 and flowing towards the cooling fan system 50. In the air fryer, by arranging the drive motor 51 in the mounting chamber 318, the drive motor 51 can be cooled while the external cold air flows through the mounting chamber 318 and enters the cooling fan system 50 to form heat dissipation cold flow, so that normal operation of the drive motor 51 is guaranteed, and the performance stability and reliability of the drive motor 51 are effectively improved.

As shown in FIG 13 and FIG 14, an inner wall of the mounting chamber 318 is provided with a communicating port 161 enabling the mounting chamber 318 and the cooling fan system 50 to communicate, and the communicating port 161 is suitable for corresponding to at least part of the drive motor 51. The communicating port 161 corresponds to at least part of the drive motor 51, so that the heat dissipation efficiency and heat dissipation effect of the drive motor 51 can be effectively improved.

As shown in FIG 13, a window 17 is arranged at the top of the cooking chamber 11, a visible assembly 18 for closing the window 17 is arranged at the window 17, the visible assembly 18 is at least partially located in the heat dissipation chamber 314, and the visible assembly 18 is preferably at least partially made of high-temperature-resistant transparent glass, high-temperature-resistant transparent plastic and other high-temperature-resistant transparent materials. By arranging the window 17 and the visible assembly 18 closing the window 17 at the top of the cooking chamber 11, the inside of the cooking chamber 11 is visible, a user can visually observe a cooking state of food in the cooking chamber 11 so as to better cook the food, and the cooking effect and the user's cooking experience can be effectively improved. At the same time, the visible assembly 18 is at least partially arranged in the heat dissipation chamber 314, so that the heat dissipation cold flow in the heat dissipation chamber 314 can be used to dissipate heat of the visible assembly 18, not only can the performance stability of the visible assembly 18 be guaranteed, but also scalding of the user caused by heat transfer of a high temperature in the cooking chamber 11 to a surface of the visible assembly 18 can be avoided, and the user's use safety is improved.

As shown in FIG 13, the heat dissipation air inlet 315 and the exhaust outlet 316 are suitable for being arranged at a rear side and a bottom of the fryer body 10 respectively. By arranging the heat dissipation air inlet 315 and the exhaust outlet 316 at the rear side and the bottom of the fryer body 10 respectively, the heat dissipation air inlet 315 and the exhaust outlet 316 can be hidden, so that the overall beauty of the air fryer product is improved.

As shown in FIG 13 and FIG 16, in an optional embodiment, the power cord 70 is suitable for being arranged at the rear side of the fryer body 10 and adjacent to the exhaust outlet 316. By arranging the power cord 70 at the rear side of the fryer body 10 and adjacent to the exhaust outlet 316, the power cord 70 can be hidden to improve the overall beauty of the air fryer product, and heat dissipation cold flow exhausted from the exhaust outlet 316 can also be used to dissipate heat of the power cord 70 to further improve the heat dissipation effect.

As shown in FIG 13 to FIG 16, an air outlet channel 19 is arranged in the fryer body 10, one end of the air outlet channel 19 communicates with the atmosphere, the other end is provided with a mixed air outlet 191, and the mixed air outlet 191 is suitable for communicating with the hot air circulating system 20 and the cooling fan system 50. By arranging the mixed air outlet 191 communicating with the hot air circulating system 20 and the cooling fan system 50 at one end of the air outlet channel 19, the circulating heat flow produced by the hot air circulating system 20 and the heat dissipation cold flow produced by the cooling fan system 50 can be mixed and exhausted, so that a temperature of exhausted airflow from the air outlet channel 19 is lowered, the exhausted airflow is prevented from having an overhigh temperature to scald a user, and the user's use safety and user experience can be effectively improved.

It should be noted that the terms used here are only intended to describe specific implementations and are not intended to limit exemplary implementations according to the present disclosure. As used herein, unless otherwise explicitly stated in the context, the singular form is also intended to include the plural form. Additionally, it should further be understood that, when the terms "comprising" and/or "including" are used in this specification, they indicate the presence of features, steps, operations, devices, assemblies and/or combinations thereof.

Unless otherwise specified specifically, the relative arrangement, numerical expressions and values of components and steps described in these embodiments do not limit the scope of the present disclosure. At the same time, it should be understood that for ease of description, the dimensions of the various parts shown in the accompanying drawings are not drawn according to an actual proportional relation. For techniques, methods, and devices known to those of ordinary skill in the related art, detailed discussions may not be made, but in appropriate circumstances, such techniques, methods, and devices should be considered as part of the granted specification. In all the examples shown and discussed here, any specific value should be interpreted as merely illustrative and not restrictive. Therefore, other examples of exemplary embodiments may have different values. It should be noted that: similar numerals and letters represent similar items in the following accompanying drawings. Therefore, once an item is defined in one accompanying drawing, it does not need to be further discussed in subsequent accompanying drawings.

The above provides a detailed introduction to the novel air fryer with the good heating effect provided in the present disclosure. Specific examples are applied herein to explain the principles and implementations of the present disclosure. The illustration of the above embodiments is only used to help understanding a method and its core idea of the present disclosure. Meanwhile, for those of ordinary skill in the art, there may be changes in the specific implementations and application scope based on the ideas of the present disclosure. In summary, the content of this specification should not be understood as limiting the present disclosure.

### Industrial Applicability

In the present application, the air guiding chamber which communicates with the air outlet and opens downwards is arranged at the top of the cooking chamber, so that the airflow flowing out of the air outlet can be guided downwards to enter the frying basket through the top opening of the frying basket so as to heat food in the frying basket, and the situation that the food is burnt because the circulating heat flow is directly blown into the frying basket can be avoided; and meanwhile, in the present application, the air guiding chamber is arranged to be annular, and the air guiding and distributing member is arranged in the air outlet to distribute and guide the airflow in the air outlet into the air guiding chamber from at least two directions, so that the airflow flowing out of the air outlet is guided into the frying basket relatively evenly to heat food in the frying basket, the problem that the airflow flowing out of the air outlet is regionally concentrated, the food in the frying basket is unevenly heated, and differences in cooking region are caused is avoided, the cooking effect is effectively improved, and the user experience is improved.

## Claims

1. A novel air fryer with a good heating effect, **characterized by** comprising:
a fryer body, with a cooking chamber arranged inside, wherein an air duct plate is arranged at a top of the cooking chamber, and the air duct plate is suitable for concaving upwards to form an annular air guiding chamber which opens downwards;
a frying basket, arranged in the cooking chamber, wherein a top opening is formed in a top of the frying basket, the top opening is at least partially located under the air guiding chamber, and a vent hole communicating with the cooking chamber is formed in a lower portion of the frying basket;
a hot air chamber, arranged in the fryer body, wherein the hot air chamber has an air inlet and an air outlet, the air outlet communicates with the air guiding chamber, and the air inlet communicates with the cooking chamber; and
an air guiding and distributing member, arranged in the air outlet, wherein the air guiding and distributing member is suitable for guiding airflow in the air outlet to enter the air guiding chamber from at least two directions.

2. The novel air fryer with the good heating effect according to claim 1, **characterized in that**, the air guiding and distributing member comprises a first air guiding and distributing portion, a second air guiding and distributing portion and a third air guiding and distributing portion having included angles with one another, the first air guiding and distributing portion is suitable for extending towards the inside of the air outlet, and the second air guiding and distributing portion and the third air guiding and distributing portion are suitable for extending towards two sides of the air guiding chamber respectively.

3. The novel air fryer with the good heating effect according to claim 2, **characterized in that**, a centrifugal fan is arranged in the hot air chamber, the air outlet communicates with the hot air chamber on one side of the centrifugal fan through a hot air channel, and the first air guiding and distributing portion is arranged in a side of the air outlet close to a rotation direction of the centrifugal fan, and/or
a connection of the first air guiding and distributing portion with the second air guiding and distributing portion and the third air guiding and distributing portion is suitable for forming an arc-shaped flow guiding structure, and extension lines of extending directions of the second air guiding and distributing portion and the third air guiding and distributing portion are suitable for being tangent to at least one position of an inner side wall of the air guiding chamber respectively.

4. The novel air fryer with the good heating effect according to claim 1, **characterized in that**, the air guiding and distributing member is provided with a plurality of bendable bending portions, the air duct plate is provided with a plurality of fixing holes for the bending portions to pass, the bending portions are suitable for passing through the fixing holes from a bottom of the air duct plate and then abutting against a top of the air duct plate after being bent, the air guiding and distributing member comprises a first air guiding and distributing portion, a second air guiding and distributing portion and a third air guiding and distributing portion having included angles with one another, and the plurality of bending portions are suitable for being arranged at positions, close to terminal extending ends, of the first air guiding and distributing portion, the second air guiding and distributing portion and the third air guiding and distributing portion respectively.

5. The novel air fryer with the good heating effect according to any one of claims 1 to 4, **characterized in that**, a window communicating with the cooking chamber is arranged at a top of the fryer body, a window assembly for closing the window is arranged in the window, the window assembly at least partially corresponds to the top opening of the frying basket, the air guiding chamber is arranged surrounding the window on an outer edge of the window, a heating tube surrounding the outer edge of the window is arranged in the air guiding chamber, and the heating tube is a light-wave tube.

6. The novel air fryer with the good heating effect according to any one of claims 1 to 5, **characterized by** comprising:
the fryer body, with the cooking chamber arranged inside, wherein a visible assembly is arranged at the top of the cooking chamber, an annular heat dissipation channel is arranged on an outer side of the visible assembly, a heat dissipation chamber is arranged outside the cooking chamber, the heat dissipation channel communicates with the heat dissipation chamber, and the fryer body is provided with an exhaust outlet communicating with the heat dissipation cavity;
an electric appliance, at least partially located in the heat dissipation channel;
a hot air circulating system, arranged in the fryer body and communicating with the cooking chamber;
a cooling fan system, arranged in the fryer body, wherein the fryer body is provided with an air inlet communicating with the cooling fan system, and an air outlet of the cooling fan system communicates with the heat dissipation channel; and
the air guiding and distributing member, arranged in the air outlet, wherein the air guiding and distributing member is used to guide airflow to enter the heat dissipation channel from at least two directions.

7. The novel air fryer with the good heating effect according to claim 6, **characterized in that**, the air guiding and distributing member comprises a first flow guiding portion, a second flow guiding portion and a third flow guiding portion having included angles with one another, the first flow guiding portion is suitable for extending towards the inside of the air outlet, the second flow guiding portion and the third flow guiding portion are suitable for extending towards the inside of the heat dissipation channel on two sides of the visible assembly respectively, and the electric appliance is arranged adjacent to the second flow guiding portion and/or the third flow guiding portion.

8. The novel air fryer with the good heating effect according to claim 6, **characterized in that**, a side opening communicating with the cooking chamber is formed in a side portion of the fryer body, the frying basket is detachably arranged in the cooking chamber through the side opening, the frying basket comprises a frying basket body arranged in the cooking chamber and used to carry food and a frying basket door plate fixedly connected with the frying basket body and used to close the side opening, a cold air channel is arranged in the frying basket door plate, and two ends of the cold air channel are suitable for communicating with the heat dissipation channel and the exhaust outlet respectively.

9. The novel air fryer with the good heating effect according to any one of claims 1 to 5, **characterized by** comprising:
a machine body, with a cooking chamber and a heat dissipation chamber located outside the cooking chamber arranged inside, wherein the machine body is provided with an exhaust outlet communicating with the heat dissipation chamber;
a hot air circulating system, arranged in the machine body and communicating with the cooking chamber;
a power cord, extending from the outside to the inside of the machine body and fixed to the machine body; and
a cooling fan system, arranged in the machine body, wherein the machine body is provided with a cold air inlet communicating with the cooling fan system, the cooling fan system comprises a first air outlet and a second air outlet, the first air outlet communicates with the heat dissipation chamber, and the second air outlet corresponds to the power cord.

10. The novel air fryer with the good heating effect according to claim 9, **characterized in that**, the machine body is internally provided with a mounting chamber communicating with the cold air inlet and the cooling fan system, a drive motor is arranged in the mounting chamber, the drive motor is in driving connection with the cooling fan system and the hot air circulating system, external cold air is suitable for entering the mounting chamber from the cold air inlet under the action of the cooling fan system and flowing towards the cooling fan system, an inner wall of the mounting chamber is provided with a communicating port enabling the mounting chamber and the cooling fan system to communicate, and the communicating port is suitable for corresponding to at least part of the drive motor.

11. The novel air fryer with the good heating effect according to any one of claims 1 to 9, **characterized in that**, an air outlet channel is arranged in the machine body, one end of the air outlet channel communicates with the atmosphere, the other end is provided with a mixed air outlet, and the mixed air outlet is suitable for communicating with the hot air circulating system and the cooling fan system.

12. The novel air fryer with the good heating effect according to any one of claims 1 to 11, **characterized by** comprising:
the fryer body, with a cooking chamber having a top opening arranged inside, wherein an inner transparent plate used to close the top opening is arranged at the top opening;
a decorative ring, arranged on the top opening, wherein a window corresponding to the top opening is arranged in a middle of the decorative ring, and a visible panel is arranged at an upper opening of the window; and
a heat insulation ring, arranged between the top opening and the decorative ring, wherein a hole corresponding to the top opening is formed in a middle of the heat insulation ring, a lower side of the heat insulation ring is connected with the fryer body, and an upper side is connected with a lower side of the decorative ring.

13. The novel air fryer with the good heating effect according to claim 12, **characterized in that**, an air duct plate defining the top opening and an upper machine core are arranged at the top of the cooking chamber, the upper machine core is located above the air duct plate, a periphery of the inner transparent plate is suitable for being pressed and fixed to the air duct plate by the upper machine core, an outer edge of the inner transparent plate is sleeved with a sealing ring made of an elastic high-temperature-resistant material, and the inner transparent plate is suitable for being in tight fit with the air duct plate and the upper machine core through the sealing ring.

14. The novel air fryer with the good heating effect according to any one of claims 1 to 13, **characterized by** comprising the fryer body and the cooking chamber arranged in the fryer body, an air duct plate, a heating tube and a heating tube fixing structure used to fix the heating tube to an inner side of the air duct plate being arranged in the cooking chamber, and **characterized in that**, the heating tube fixing structure comprises a connecting member and a fixing member connected with the connecting member to clamp the heating tube, a limiting portion is arranged on the connecting member, a bendable bending portion is arranged at an end of the connecting member close to the limiting portion, the bending portion has an extended state and a bent state, the air duct plate is provided with a connecting hole corresponding to the bending portion, in the extended state, the bending portion is able to stretch into an outer side of the air duct plate from an inner side of the air duct plate through the connecting hole, and when the bending portion stretches into the outer side of the air duct plate from the inner side of the air duct plate through the connecting hole and the bending portion is adjusted to be in the bent state, the limiting portion abuts against an inner side wall of the air duct plate, and the bending portion abuts against an outer side wall of the air duct plate.

15. The novel air fryer with the good heating effect according to claim 14, **characterized in that**, the connecting member comprises a first connecting member and a second connecting member arranged side by side, the first connecting member and the second connecting member are connected to two ends of the fixing member respectively, the first connecting member and the second connecting member are provided with a first bending portion and a second bending portion respectively, and the first bending portion and the second bending portion are suitable for being bent away from each other respectively; and the first connecting member and the second connecting member are provided with a first notch and a second notch respectively, the first notch and the second notch transversely extend to separate at least part of the bending portion and the limiting portion, the first notch and the second notch have opposite extending directions, and widths of the first notch and the second notch match with a thickness of the air duct plate.
